# EUROPEAN PATENT APPLICATION

(11) **EP 4 845 270 A1**
(43) Date of publication of application: **25.11.2026**
(21) Application number: 25747717.4
(22) Date of filing: 22.01.2025
(51) Int. Cl.: H04W 72/0453

(54) **COMMUNICATION METHOD, APPARATUS AND SYSTEM**

(30) Priority: 31.01.2024 CN 202410142639
(71) Applicant: Huawei Technologies Co., Ltd., Shenzhen, Guangdong 518129 (CN)
(72) Inventor: LI, Xinxian, Shenzhen, Guangdong 518129 (CN); DING, Mengying, Shenzhen, Guangdong 518129 (CN); PENG, Jinlin, Shenzhen, Guangdong 518129 (CN); ZHOU, Guohua, Shenzhen, Guangdong 518129 (CN)
(74) Representative: Huawei European IPR
(86) International application number: PCT/CN2025/074087
(87) International publication number: WO 2025/162147

(57) **Abstract**

This specification discloses a communication method, apparatus, and system, and relates to the communication field, to resolve a problem that a communication requirement in a complex communication scenario cannot be met due to poor uplink communication quality of a terminal device at a cell coverage edge. The method includes: An access network device sends a system information block SIB of a cell on a downlink carrier of the cell. A terminal device receives the SIB of the cell on the downlink carrier of the cell, and sends, on an uplink carrier of the cell based on the received SIB, a random access request for accessing the cell. The access network device receives, on the uplink carrier of the cell, the random access request for accessing the cell. A frequency band corresponding to the uplink carrier of the cell is different from a frequency band corresponding to the downlink carrier of the cell. Solutions of this application may be widely applied to fields such as the field of communication technologies, artificial intelligence, internet of vehicles, and smart home networking.

## Description

This application claims priority to Chinese Patent Application No. 202410142639.7, filed with the China National Intellectual Property Administration on January 31, 2024 and entitled "COMMUNICATION METHOD, APPARATUS, AND SYSTEM", which is incorporated herein by reference in its entirety.

### TECHNICAL FIELD

This application relates to the communication field, and in particular, to a communication method, apparatus, and system.

### BACKGROUND

When accessing a network, a terminal device (or referred to as user equipment (user equipment, UE)) needs to access a cell corresponding to a base station. The cell is an area in which the base station provides a wireless communication service for a user of the terminal device. When the terminal device accesses the cell, the base station corresponding to the cell performs transmission of downlink data on a downlink carrier, and the terminal device performs transmission of uplink data on an uplink carrier. The downlink carrier is a radio wave of a specific frequency that carries the downlink data. The uplink carrier is a radio wave of a specific frequency that carries the uplink data.

However, with development of communication technologies, communication scenarios are increasingly complex. A terminal device at a cell coverage edge has a problem of poor uplink communication quality. Therefore, a communication requirement in a complex communication scenario cannot be met.

### SUMMARY

Embodiments of this application provide a communication method, apparatus, and system, to resolve a problem that a communication requirement in a complex communication scenario cannot be met due to poor uplink communication quality of a terminal device at a cell coverage edge.

To achieve the foregoing objective, this application uses the following technical solutions.

According to a first aspect, an embodiment of this application provides a communication method. The method may be performed by a terminal device or a functional module or a chip in the terminal device. For example, the method is performed by the terminal device. The method includes: The terminal device receives a system information block (system information block, SIB) of a cell on a downlink carrier of the cell, and sends, on an uplink carrier of the cell based on the received SIB, a random access request for accessing the cell. A frequency band corresponding to the uplink carrier of the cell is different from a frequency band corresponding to the downlink carrier of the cell.

According to the method in the first aspect, the terminal device may access the cell whose uplink carrier and downlink carrier correspond to different frequency bands. In comparison with a case in which the terminal device accesses a cell whose uplink carrier and downlink carrier correspond to a same frequency band, the cell whose uplink carrier and downlink carrier correspond to different frequency bands can provide better uplink communication quality for the terminal device. For example, a frequency band corresponding to an uplink carrier of a new cell is a lower frequency band, and a frequency band corresponding to a downlink carrier of the new cell is a higher frequency band. The lower frequency band corresponding to the uplink carrier enables larger uplink coverage of the cell, thereby improving the uplink communication quality of the terminal device.

In a possible design, the SIB of the cell indicates that a frequency difference between a lowest frequency of the frequency band corresponding to the uplink carrier of the cell and a lowest frequency of the frequency band corresponding to the downlink carrier of the cell is greater than a threshold.

Based on the possible design, the terminal device may determine, based on indication of the SIB of the cell, that the frequency difference between the frequency band corresponding to the uplink carrier of the cell and the frequency band corresponding to the downlink carrier of the cell is greater than the threshold, and implicitly indicate that both the frequency band corresponding to the uplink carrier of the cell and the frequency band corresponding to the downlink carrier of the cell are a new frequency band predefined in a protocol, thereby improving flexibility of indicating, by using the SIB of the cell, the frequency band corresponding to the uplink carrier of the cell and the frequency band corresponding to the downlink carrier of the cell. It is predefined in the protocol that a frequency difference between an uplink frequency band corresponding to the new frequency band and a downlink frequency band corresponding to the new frequency band is greater than a threshold (for example, 1 GHz).

In a possible design, a new frequency band is predefined in a protocol, the SIB of the cell indicates that both the frequency band corresponding to the uplink carrier of the cell and the frequency band corresponding to the downlink carrier of the cell are the predefined new frequency band, and the terminal device may send, on the uplink carrier of the cell, the random access request for accessing the cell. A frequency difference between an uplink frequency band corresponding to the new frequency band and a downlink frequency band corresponding to the new frequency band is greater than a threshold (for example, 1 GHz), and a duplex mode corresponding to the new frequency band is frequency division duplex (frequency division duplex, FDD) or a first duplex mode. The first duplex mode is a duplex mode that is not defined in an existing protocol, for example, a supplementary uplink lite (supplementary uplink lite, SUL-lite) mode.

Based on the possible design, the new frequency band predefined in the protocol is provided. The frequency difference between the uplink frequency band corresponding to the new frequency band and the downlink frequency band corresponding to the new frequency band is greater than the threshold (for example, 1 GHz). When the SIB of the cell indicates that both the frequency band corresponding to the uplink carrier of the cell and the frequency band corresponding to the downlink carrier of the cell are the new frequency band, the terminal device may also access the cell, to improve the uplink communication quality. For example, the predefined new frequency band is a first frequency band, an uplink frequency band corresponding to the first frequency band is 869 MHz to 894 MHz, and a downlink frequency band corresponding to the first frequency band is 4400 MHz to 5000 MHz. When the SIB of the cell indicates that both the frequency band corresponding to the uplink carrier supported by the cell and the frequency band corresponding to the downlink carrier supported by the cell are the first frequency band, the terminal device can obtain good uplink communication quality by accessing the cell because the frequency band corresponding to the uplink carrier of the cell is a lower frequency band.

In a possible design, the SIB of the cell indicates an uplink-downlink frame configuration of a time domain resource corresponding to the uplink carrier of the cell and an uplink-downlink frame configuration of a time domain resource corresponding to the downlink carrier of the cell.

Based on the possible design, the terminal device may transmit uplink data on the uplink time domain resource indicated by the SIB of the cell, and receive downlink data on the downlink time domain resource indicated by the SIB of the cell. In this case, the SIB of the cell indicates that the uplink-downlink frame configuration of the time domain resource corresponding to the uplink carrier of the cell may be the same as or different from the uplink-downlink frame configuration of the time domain resource corresponding to the downlink carrier of the cell, so that an access network device corresponding to the cell can independently configure an uplink time domain resource and a downlink time domain resource for the terminal device, thereby improving resource utilization.

In a possible design, the uplink-downlink frame configuration of the time domain resource corresponding to the uplink carrier of the cell is different from the uplink-downlink frame configuration of the time domain resource corresponding to the downlink carrier of the cell.

Based on the possible design, when the uplink-downlink frame configuration of the time domain resource corresponding to the uplink carrier of the cell is different from the uplink-downlink frame configuration of the time domain resource corresponding to the downlink carrier of the cell, the terminal device can flexibly use the time domain resource corresponding to the uplink carrier of the cell and the time domain resource corresponding to the downlink carrier of the cell.

According to a second aspect, an embodiment of this application provides a communication method. The method may be performed by an access network device or a functional module or a chip in the access network device. For example, the method is performed by the access network device. The method includes: The access network device sends a SIB of a cell on a downlink carrier of the cell, and receives, on an uplink carrier of the cell, a random access request for accessing the cell. A frequency band corresponding to the uplink carrier of the cell is different from a frequency band corresponding to the downlink carrier of the cell.

According to the method in the second aspect, the cell that corresponds to the access network device and whose uplink carrier and downlink carrier correspond to different frequency bands may serve a terminal device that accesses the cell. In this case, the terminal device can flexibly access the uplink carrier and the downlink carrier in different frequency bands based on different service requirements, and is no longer limited to accessing a cell whose uplink carrier and downlink carrier correspond to a same frequency band. This provides more choices for types of cells accessed by the terminal device.

In a possible design, the SIB of the cell indicates that a frequency difference between a lowest frequency of the frequency band corresponding to the uplink carrier of the cell and a lowest frequency of the frequency band corresponding to the downlink carrier of the cell is greater than a threshold.

Based on the possible design, the access network device may indirectly indicate that a frequency range of the uplink carrier of the cell differs greatly from a frequency range of the downlink carrier of the cell, to achieve an effect the same as directly indicating that the frequency band corresponding to the uplink carrier of the cell is different from the frequency band corresponding to the downlink carrier of the cell. In this way, the terminal device can flexibly access the cell whose uplink carrier and downlink carrier correspond to different frequency bands.

In a possible design, the SIB of the cell indicates an uplink-downlink frame configuration of a time domain resource corresponding to the uplink carrier of the cell and an uplink-downlink frame configuration of a time domain resource corresponding to the downlink carrier of the cell.

Based on the possible design, the access network device can independently configure an available uplink time domain resource of the cell and an available downlink time domain resource of the cell for the terminal device. In addition, a sum of a quantity of available uplink time domain resources of the cell that are configured by the access network device and a quantity of available downlink time domain resources of the cell that are configured by the access network device is no longer limited to be equal to a quantity of all time domain resources in a periodicity. Therefore, the access network device may configure an appropriate available uplink time domain resource and an appropriate available downlink time domain resource of the cell for the terminal device based on a service access requirement of the terminal device, thereby improving resource utilization.

In a possible design, the uplink-downlink frame configuration of the time domain resource corresponding to the uplink carrier of the cell is different from the uplink-downlink frame configuration of the time domain resource corresponding to the downlink carrier of the cell.

Based on the possible design, when the uplink-downlink frame configuration of the time domain resource corresponding to the uplink carrier of the cell and the uplink-downlink frame configuration of the time domain resource corresponding to the downlink carrier of the cell that are configured by the access network device are different, the terminal device can flexibly use the time domain resource corresponding to the uplink carrier of the cell and the time domain resource corresponding to the downlink carrier of the cell.

According to a third aspect, an embodiment of this application provides a communication method. The method may be performed by a terminal device or a functional module or a chip in the terminal device. For example, the method is performed by the terminal device. The method includes: The terminal device receives first indication information from an access network device corresponding to a first cell, and performs cell switching in a cell switching manner indicated by the first indication information, where the first indication information indicates a cell switching manner of switching an uplink carrier and not switching a downlink carrier.

Based on the possible design, the terminal device may directly switch an uplink carrier and not switch a downlink carrier based on indication of the first indication information, so that the terminal device can switch from the first cell to a second cell based on indication of the first indication information, thereby reducing resource overheads of the terminal device. In addition, the first indication information indicates to switch an uplink carrier and not switch a downlink carrier, so that a switching process in which the terminal device switches from the first cell to the second cell does not include a downlink switching procedure such as downlink synchronization or beam sweeping, thereby reducing downlink terminal latency of the terminal device.

In a possible design, the terminal device sends uplink information to the first cell on a first uplink carrier, and receives downlink information of the first cell on a first downlink carrier; and in response to switching from the first cell to the second cell, the terminal device sends uplink information to the second cell on a second uplink carrier, and receives downlink information of the second cell on the first downlink carrier, where the first uplink carrier is different from the second uplink carrier.

Based on the possible design, the terminal device may receive the downlink information of the first cell or the downlink information of the second cell on the first downlink carrier. When the terminal device switches from the first cell to the second cell, an uplink carrier on which the terminal device transmits uplink information is switched from a first carrier to the second uplink carrier, and a downlink carrier on which the terminal device receives downlink information is still the first downlink carrier, so that a downlink on which the terminal device receives downlink information is not interrupted in the process in which the terminal device switches from the first cell to the second cell, thereby reducing service interruption latency and reducing cell switching latency.

In a possible design, the first indication information is carried in radio resource control (radio resource control, RRC) reconfiguration signaling, the first indication information is carried in media access control control element (media access control control element, MAC CE) signaling, or the first indication information is carried in downlink control information (downlink control information, DCI).

Based on the possible design, various types of signaling that may carry the first indication information are provided. In this way, the first indication information is carried in different signaling in different scenarios, so that this solution is flexibly applied to various communication scenarios in a diversified manner, thereby improving utilization of the solution.

According to a fourth aspect, an embodiment of this application provides a communication method. The method may be performed by an access network device or a functional module or a chip in the access network device. For example, the method is performed by the access network device. The method includes: obtaining first indication information, and sending the first indication information, where the first indication information indicates a cell switching manner of switching an uplink carrier and not switching a downlink carrier.

Based on the possible design, the access network device sends the first indication information to a terminal device, so that the terminal device can switch an uplink carrier and not switch a downlink carrier based on indication of the first indication information, to switch from a first cell to a second cell, thereby reducing resource overheads of the terminal.

In a possible design, the first indication information is carried in radio resource control (radio resource control, RRC) reconfiguration signaling, the first indication information is carried in media access control control element (media access control control element, MAC CE) signaling, or the first indication information is carried in downlink control information (downlink control information, DCI).

Based on the possible design, various types of signaling that may carry the first indication information are provided. In this way, the first indication information is carried in different signaling in different scenarios, so that this solution is flexibly applied to various communication scenarios in a diversified manner, thereby improving utilization of the solution.

According to a fifth aspect, this application provides a communication apparatus. The communication apparatus may be a terminal device or a chip or a system-on-chip in the terminal device, or may be a functional module that is in the terminal device and that is configured to implement the method according to any one of the first aspect or the possible designs of the first aspect. The communication apparatus can implement a function performed by the terminal device in the first aspect or the possible designs of the first aspect, and the function may be implemented by hardware executing corresponding software. The hardware or the software includes one or more modules corresponding to the function. For example, the communication apparatus may include a transceiver unit and a processing unit.

The transceiver unit is configured to receive a SIB of a cell on a downlink carrier of the cell.

The processing unit is configured to send, on an uplink carrier of the cell based on the SIB, a random access request for accessing the cell, where a frequency band corresponding to the uplink carrier of the cell is different from a frequency band corresponding to the downlink carrier of the cell.

Specifically, for actions performed by the units of the communication apparatus, refer to the descriptions in any one of the first aspect or the possible designs of the first aspect. Details are not described again.

According to a sixth aspect, this application provides a communication apparatus. The communication apparatus may be an access network device or a chip or a system-on-chip in the access network device, or may be a functional module that is in the access network device and that is configured to implement the method according to any one of the second aspect or the possible designs of the second aspect. The communication apparatus can implement a function performed by the access network device in the second aspect or the possible designs of the second aspect, and the function may be implemented by hardware executing corresponding software. The hardware or the software includes one or more modules corresponding to the function. For example, the communication apparatus may include a transceiver unit.

The transceiver unit is configured to send a SIB of a cell on a downlink carrier of the cell.

The transceiver unit is further configured to receive, on an uplink carrier of the cell, a random access request for accessing the cell, where a frequency band corresponding to the uplink carrier of the cell is different from a frequency band corresponding to the downlink carrier of the cell.

Specifically, for actions performed by the units of the communication apparatus, refer to the descriptions in any one of the second aspect or the possible designs of the second aspect. Details are not described again.

According to a seventh aspect, this application provides a communication apparatus. The communication apparatus may be a terminal device or a chip or a system-on-chip in the terminal device, or may be a functional module that is in the terminal device and that is configured to implement the method according to any one of the third aspect or the possible designs of the third aspect. The communication apparatus can implement a function performed by the terminal device in the third aspect or the possible designs of the third aspect, and the function may be implemented by hardware executing corresponding software. The hardware or the software includes one or more modules corresponding to the function. For example, the communication apparatus may include a transceiver unit and a processing unit.

The transceiver unit is configured to receive first indication information from an access network device corresponding to a first cell.

The processing unit is configured to perform cell switching in a cell switching manner indicated by the first indication information, where the first indication information indicates a cell switching manner of switching an uplink carrier and not switching a downlink carrier.

Specifically, for actions performed by the units of the communication apparatus, refer to the descriptions in any one of the third aspect or the possible designs of the third aspect. Details are not described again.

According to an eighth aspect, this application provides a communication apparatus. The communication apparatus may be an access network device or a chip or a system-on-chip in the access network device, or may be a functional module that is in the access network device and that is configured to implement the method according to any one of the fourth aspect or the possible designs of the fourth aspect. The communication apparatus can implement a function performed by the access network device in the fourth aspect or the possible designs of the fourth aspect, and the function may be implemented by hardware executing corresponding software. The hardware or the software includes one or more modules corresponding to the function. For example, the communication apparatus may include a processing unit and a transceiver unit.

The processing unit is configured to obtain first indication information.

The transceiver unit is configured to send the first indication information, where the first indication information indicates a cell switching manner of switching an uplink carrier and not switching a downlink carrier.

Specifically, for actions performed by the units of the communication apparatus, refer to the descriptions in any one of the fourth aspect or the possible designs of the fourth aspect. Details are not described again.

According to a ninth aspect, this application provides a communication apparatus. In a possible design, the communication apparatus includes a processor and a communication interface. The processor and the communication interface are configured to support the communication apparatus in performing the communication method according to any one of the first aspect or the possible designs of the first aspect, the processor and the communication interface are configured to support the communication apparatus in performing the communication method according to any one of the second aspect or the possible designs of the second aspect, the processor and the communication interface are configured to support the communication apparatus in performing the communication method according to any one of the third aspect or the possible designs of the third aspect, or the processor and the communication interface are configured to support the communication apparatus in performing the communication method according to any one of the fourth aspect or the possible designs of the fourth aspect. In another possible design, the communication apparatus may further include a memory. The memory is configured to store computer-executable instructions and data that are necessary for the communication apparatus. When the communication apparatus runs, the processor executes the computer-executable instructions stored in the memory, so that the communication apparatus performs the communication method according to any one of the first aspect or the possible designs of the first aspect, the communication apparatus performs the communication method according to any one of the second aspect or the possible designs of the second aspect, the communication apparatus performs the communication method according to any one of the third aspect or the possible designs of the third aspect, or the communication apparatus performs the communication method according to any one of the fourth aspect or the possible designs of the fourth aspect.

According to a tenth aspect, this application provides a communication system. The communication system includes the communication apparatus provided in the fifth aspect and the communication apparatus provided in the sixth aspect; the communication system includes the communication apparatus provided in the fifth aspect and the communication apparatus provided in the ninth aspect; the communication system includes the communication apparatus provided in the sixth aspect and the communication apparatus provided in the ninth aspect; the communication system includes the communication apparatus provided in the seventh aspect and the communication apparatus provided in the eighth aspect; the communication system includes the communication apparatus provided in the seventh aspect and the communication apparatus provided in the ninth aspect; or the communication system includes the communication apparatus provided in the eighth aspect and the communication apparatus provided in the ninth aspect.

According to an eleventh aspect, this application provides a computer-readable storage medium. The computer-readable storage medium stores computer instructions. When the computer instructions are run on a computer, the computer is caused to perform the communication method according to any one of the first aspect or the possible designs of the first aspect, the computer is caused to perform the communication method according to any one of the second aspect or the possible designs of the second aspect, the computer is caused to perform the communication method according to any one of the third aspect or the possible designs of the third aspect, or the computer is caused to perform the communication method according to any one of the fourth aspect or the possible designs of the fourth aspect.

According to a twelfth aspect, this application provides a computer program product. The computer program product includes computer instructions. When the computer instructions are run on a computer, the computer is caused to perform the communication method according to any one of the first aspect or the possible designs of the first aspect, the computer is caused to perform the communication method according to any one of the second aspect or the possible designs of the second aspect, the computer is caused to perform the communication method according to any one of the third aspect or the possible designs of the third aspect, or the computer is caused to perform the communication method according to any one of the fourth aspect or the possible designs of the fourth aspect.

### BRIEF DESCRIPTION OF DRAWINGS

FIG. 1a to FIG.1c are diagrams of frequency bands, uplink coverage, and downlink coverage;
FIG. 2 is a diagram of an optimal uplink and an optimal downlink of a terminal device at a cell edge;
FIG. 3 is a diagram of a communication system according to an embodiment of this application;
FIG. 4 is a schematic flowchart of a communication method according to this application;
FIG. 5 is a diagram of time domain uplink-downlink frame configurations corresponding to uplink and downlink carriers according to this application;
FIG. 6 is a schematic flowchart of a communication method according to an embodiment of this application;
FIG. 7 is a diagram of frequency bands corresponding to uplink and downlink carriers of cells according to an embodiment of this application;
FIG. 8 is a diagram of cells defined in NR;
FIG. 9 is a schematic flowchart of a communication method according to this application;
FIG. 10 is a diagram of a structure of a communication apparatus according to this application;
FIG. 11 is a diagram of a structure of a communication apparatus according to this application;
FIG. 12 is a diagram of a structure of a communication apparatus according to this application;
FIG. 13 is a diagram of a structure of a communication apparatus according to this application; and
FIG. 14 is a diagram of a structure of a communication apparatus according to this application.

### DESCRIPTION OF EMBODIMENTS

Before embodiments of this application are described, related technical terms in embodiments of this application are explained and described. It should be noted that the following explanations and descriptions are intended to facilitate understanding of embodiments of this application, and should not be construed as any limitation on the protection scope claimed in embodiments of this application.

A cell, also referred to as a cellular cell, is an area covered by a base station or a part of the base station in a cellular mobile communication system. A terminal device may access the cell, to receive a wireless communication service provided by the base station. One base station may correspond to one or more cells, and these cells may be referred to as cells corresponding to the base station, cells of the base station, or the like. One cell may correspond to an uplink carrier and a downlink carrier. The uplink carrier may be used by the terminal device to send uplink data and/or information to a base station corresponding to the cell, and the downlink carrier may be used by the base station corresponding to the cell to send downlink data and/or information to the terminal device. The downlink data and/or information is carried on a radio wave of a specific frequency, and is transmitted to the terminal device through an antenna of the base station. The radio wave carrying the downlink data is referred to as a downlink carrier. The uplink data and/or information is carried on a radio wave of a specific frequency, and is transmitted to the base station through an antenna of the terminal device. The radio wave carrying the uplink data is referred to as an uplink carrier.

Cell coverage is classified into uplink coverage and downlink coverage. The uplink coverage is a maximum distance or a maximum range that can be reached when a terminal device sends data to a base station corresponding to a cell, and may also be referred to as an uplink transmission radiation range. The downlink coverage is a maximum distance or a maximum range that can be reached when the base station corresponding to the cell sends data to the terminal device, and may also be referred to as a downlink transmission radiation range. The uplink coverage may be determined based on an uplink transmit power of the terminal device and/or a frequency band corresponding to an uplink carrier used by the terminal device. A larger uplink transmit power of the terminal device indicates larger uplink coverage, and a higher frequency band corresponding to the uplink carrier used by the terminal device indicates smaller uplink coverage. It may be understood that the uplink transmit power of the terminal device is in direct proportion to the uplink coverage, and the frequency band corresponding to the uplink carrier is in inverse proportion to the uplink coverage. Similarly, the downlink coverage may be determined based on a downlink transmit power of the base station corresponding to the cell and/or a frequency band corresponding to a downlink carrier used by the base station corresponding to the cell. A larger downlink transmit power of the base station corresponding to the cell indicates larger downlink coverage, and a higher frequency band corresponding to the downlink carrier used by the base station corresponding to the cell indicates smaller downlink coverage. It may be understood that the downlink transmit power of the base station corresponding to the cell is in direct proportion to the downlink coverage, and the frequency band corresponding to the downlink carrier is in inverse proportion to the downlink coverage. Because the terminal device and the base station have different communication capabilities and/or sending capabilities, the uplink transmit power of the terminal device is different from the downlink transmit power of the base station. Even if the frequency band corresponding to the uplink carrier used by the terminal device is the same as the frequency band corresponding to the downlink carrier used by the base station, the uplink coverage and the downlink coverage of the cell are different.

A frequency band (band) is an applicable frequency scope and/or range of a radio wave. Each frequency band has a fixed correspondence. To be specific, a frequency band (operating band) number, an uplink frequency band (uplink operating band), a downlink frequency band (downlink operating band), and a duplex mode (duplex mode) that correspond to a frequency band have a fixed combination manner. The frequency band number identifies the frequency band, and different frequency bands may correspond to different frequency band numbers. The uplink frequency band is a frequency range of an uplink carrier. The downlink frequency band is a frequency range of a downlink carrier. The duplex mode may include but is not limited to frequency division duplex (frequency division duplex, FDD) and time division duplex (time division duplex, TDD). The frequency division duplex means that transmission of an uplink signal and a downlink signal is performed through two symmetric frequency channels. The time division duplex means that transmission of an uplink signal and a downlink signal is performed in different slots of a same frequency channel. The uplink signal is a signal sent by a terminal device to a base station, and correspondingly, the base station receives the uplink signal. The downlink signal is a signal sent by the base station to the terminal device, and correspondingly, the terminal device receives the downlink signal.

For example, the 3rd generation partnership project (3rd generation partnership project, 3GPP) defines a frequency band for new radio (new radio, NR). As shown in Table 1, the frequency band defined in NR is provided.

**Table 1**

| Frequency band number corresponding to a frequency band | Uplink frequency band corresponding to the frequency band (Lowest frequency of the uplink frequency band to highest frequency of the uplink frequency band (F_{UL-low} to F_{UL-high})) | Downlink frequency band corresponding to the frequency band (Lowest frequency of the downlink frequency band to highest frequency of the downlink frequency band (F_{PL-low} to F_{DL-high})) | Duplex mode corresponding to the frequency band |
|---|---|---|---|
| n1 | 1920 MHz to 1980 MHz | 2110 MHz to 2170 MHz | Frequency division duplex |
| n2 | 1850 MHz to 1910 MHz | 1930 MHz to 1990 MHz | Frequency division duplex |
| n51 | 1472 MHz to 1432 MHz | 1427 MHz to 1432 MHz | Time division duplex |

A frequency band number, an uplink frequency band, a downlink frequency band, and a duplex mode that correspond to a frequency band have a fixed combination manner. Therefore, when a base station indicates that a frequency band corresponding to an uplink carrier of a cell is n1, and that a frequency band corresponding to a downlink carrier of the cell is n1, a frequency range of an uplink band corresponding to the uplink carrier of the cell is 1920 MHz to 1980 MHz, a frequency range of a downlink band corresponding to the downlink carrier of the cell is 2110 MHz to 2170 MHz, and a duplex mode of the cell is frequency division duplex. Correspondingly, when the frequency range of the uplink band corresponding to the uplink carrier of the cell is 1920 MHz to 1980 MHz, and the frequency range of the downlink band corresponding to the downlink carrier of the cell is 2110 MHz to 2170 MHz, it may be understood that the frequency band corresponding to the uplink carrier of the cell is the same as the frequency band corresponding to the downlink carrier of the cell.

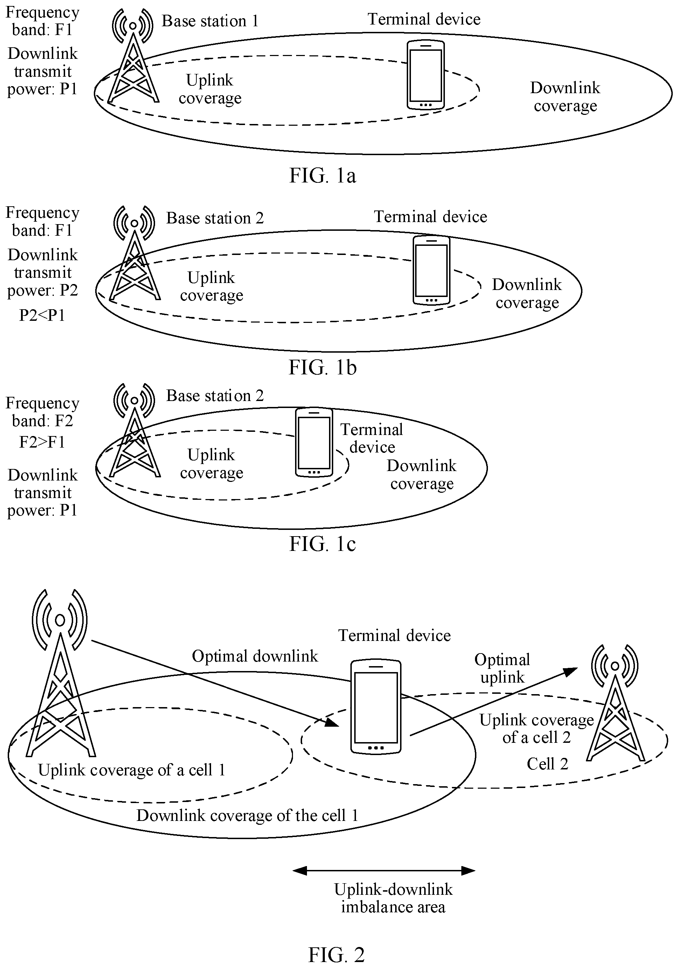

For example, it is assumed that a frequency band corresponding to an uplink carrier used by a terminal device is the same as a frequency band corresponding to a downlink carrier used by a base station, and an uplink transmit power of the terminal device remains unchanged. FIG. 1a to FIG.1c are diagrams of frequency bands, uplink coverage, and downlink coverage. As shown in FIG. 1a, a terminal device accesses a cell 1 corresponding to a base station 1 whose downlink transmit power is P1, and the cell 1 corresponds to a frequency band F1. As shown in FIG. 1b, a terminal device accesses a cell 2 corresponding to a base station 2 whose downlink transmit power is P2 (P2<P1), and the cell 2 corresponds to a frequency band F1. As shown in FIG. 1c, a terminal device accesses a cell 3 corresponding to a base station 3 whose downlink transmit power is P1, and the cell 3 corresponds to a frequency band F2 (F2>F1). In comparison with the cell 2, the frequency band corresponding to the cell 1 is the same as the frequency band corresponding to the cell 2, and the downlink transmit power of the base station 1 corresponding to the cell 1 is greater than the downlink transmit power of the base station 2 corresponding to the cell 2. Therefore, downlink coverage of the cell 1 is larger than downlink coverage of the cell 2. In addition, an uplink transmit power of the terminal device corresponding to the cell 1 is equal to an uplink transmit power of the terminal device corresponding to the cell 2. Therefore, uplink coverage of the cell 1 is the same as uplink coverage of the cell 2. In comparison with the cell 3, the frequency band corresponding to the cell 1 is lower than the frequency band corresponding to the cell 3, and the downlink transmit power of the base station 1 corresponding to the cell 1 is equal to the downlink transmit power of the base station 3 corresponding to the cell 3. In this case, the downlink coverage of the cell 1 is larger than downlink coverage of the cell 3. In addition, the frequency band corresponding to the cell 1 is lower than the frequency band corresponding to the cell 3, and the uplink transmit power of the terminal device corresponding to the cell 1 is equal to an uplink transmit power of the terminal device corresponding to the cell 3. Therefore, the uplink coverage of the cell 1 is larger than uplink coverage of the cell 3.

Currently, a frequency band corresponding to an uplink carrier of a cell that can be accessed by a terminal device is the same as a frequency band corresponding to a downlink carrier of the cell. Therefore, a frequency difference between a frequency (a lowest frequency or a highest frequency) of the uplink band corresponding to the uplink carrier of the cell that can be accessed by the terminal device and a frequency (a lowest frequency or a highest frequency) of the downlink band corresponding to the downlink carrier of the cell is zero or small (for example, less than 1 GHz). For example, both the frequency band corresponding to the uplink carrier of the cell accessed by the terminal device and the frequency band corresponding to the downlink carrier of the cell are the frequency bands identified by n51 in Table 1. In this case, the lowest frequency of the uplink band corresponding to the uplink carrier of the cell is 1472 MHz, the lowest frequency of the downlink band corresponding to the downlink carrier of the cell is 1472 MHz, and the lowest frequency of the uplink band corresponding to the uplink carrier of the cell is the same as the lowest frequency of the downlink band corresponding to the downlink carrier of the cell. Therefore, the terminal device can access the cell. For another example, both the frequency band corresponding to the uplink carrier of the cell accessed by the terminal device and the frequency band corresponding to the downlink carrier of the cell are the frequency bands identified by n1 in Table 1. In this case, the lowest frequency of the uplink band corresponding to the uplink carrier of the cell is 1920 MHz, the lowest frequency of the downlink band corresponding to the downlink carrier of the cell is 2110 MHz, and a frequency difference between the lowest frequency of the uplink band corresponding to the uplink carrier and the lowest frequency of the downlink band corresponding to the downlink carrier of the cell is 90 MHz. Therefore, the terminal device can access the cell.

However, when an uplink transmit power of a terminal device is less than a downlink transmit power of a base station, and a frequency band corresponding to an uplink carrier of a cell accessed by the terminal device is the same as a frequency band corresponding to a downlink carrier of the cell, uplink coverage and downlink coverage differ greatly, that is, the downlink coverage is larger than the uplink coverage. When the terminal device moves to a downlink coverage edge of the cell, the terminal device is no longer in the uplink coverage of the accessed cell. In this case, an uplink connection of the terminal device is not an optimal uplink. Consequently, uplink communication quality of the terminal device is affected.

For example, FIG. 2 is a diagram of an optimal uplink and an optimal downlink of a terminal device at a cell edge. In FIG. 2, a cell that currently serves the terminal device is a cell 1 corresponding to a base station 1, and uplink coverage of the cell 1 is smaller than downlink coverage of the cell 1. When the terminal device moves to an area in which the downlink coverage and the uplink coverage do not overlap (an uplink-downlink imbalance area) in the cell 1, a cell that provides the optimal downlink for the terminal device is still the cell 1, and a cell that provides the optimal uplink for the terminal device is changed from the cell 1 to a cell 2 corresponding to a base station 2. Therefore, uplink quality of service provided by the cell 1 for the terminal device in the uplink-downlink imbalance area in the cell 1 is lower than downlink quality. Consequently, uplink communication quality of the terminal device is affected. The optimal uplink is an uplink with a minimum path loss for sending uplink data and/or information by the terminal device to the base station. The optimal downlink is a downlink with a minimum path loss for sending downlink data and/or information by the base station to the terminal device.

To resolve a problem that a communication requirement in a complex communication scenario cannot be met due to poor uplink communication quality of a terminal device at a cell coverage edge, this application provides a communication method. The method includes: An access network device sends a SIB of a cell on a downlink carrier of the cell. A terminal device receives the SIB of the cell on the downlink carrier of the cell, and sends, on an uplink carrier of the cell based on the received SIB, a random access request for accessing the cell. The access network device receives, on the uplink carrier of the cell, the random access request for accessing the cell. A frequency band corresponding to the uplink carrier of the cell is different from a frequency band corresponding to the downlink carrier of the cell. In this way, the terminal device may access the cell whose uplink carrier and downlink carrier correspond to different frequency bands, so that both an uplink connection and a downlink connection of the terminal device can be optimal, thereby improving uplink communication quality of a terminal user. In addition, the terminal device can access an uplink carrier and a downlink carrier in different frequency bands based on different service requirements. For example, when a quantity of service requirements is large, the terminal device accesses an uplink carrier in a high bandwidth and a low frequency band, and accesses a downlink carrier in a high frequency band. When a latency requirement is low, the terminal device accesses an uplink carrier in a high frequency band and a downlink carrier in a low frequency band.

The following describes the communication method provided in embodiments of this application with reference to the accompanying drawings in the specification.

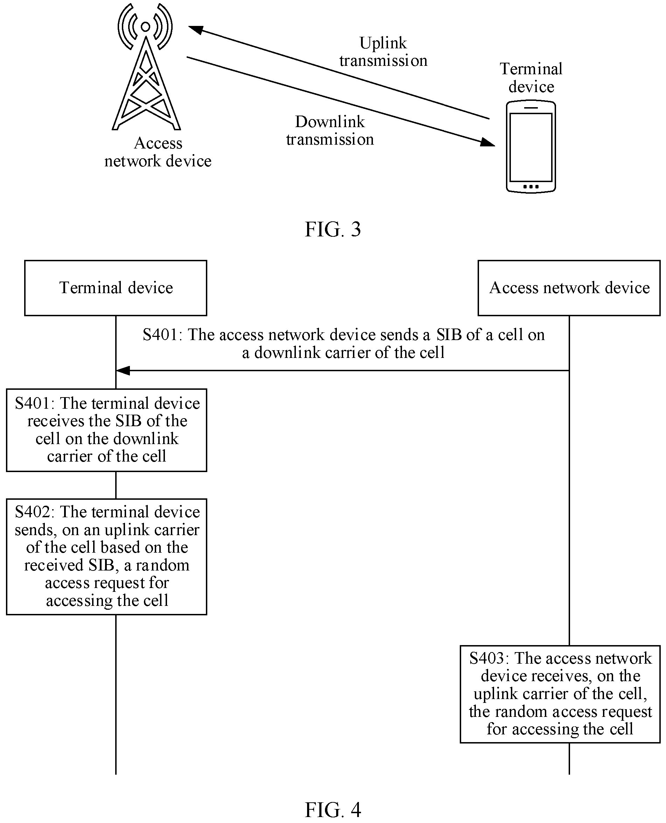

The communication method provided in embodiments of this application may be applied to a 3rd generation partnership project (third generation partnership project, 3GPP) communication system, for example, a long term evolution (long term evolution, LTE) system, a 5th generation (fifth generation, 5G) mobile communication system, an NR system, a beyond 5G (beyond 5G, B5G) mobile communication system, a 6th generation (6th generation, 6G) mobile communication system, or a new radio vehicle-to-everything (vehicle-to-everything, NR V2X) system, or may be applied to a system in which LTE and 5G hybrid networking is used, a device-to-device (device-to-device, D2D) communication system, a machine-to-machine (machine-to-machine, M2M) communication system, an internet of things (internet of things, IoT), another next-generation communication system, or a non-3GPP communication system. This is not limited. The following describes the communication method provided in embodiments of this application by using a communication system shown in FIG. 3 as an example.

The technical solutions in embodiments of this application may be applied to various communication scenarios, for example, may be applied to one or more of the following communication scenarios: enhanced mobile broadband (enhanced mobile broadband, eMBB), ultra-reliable low-latency communication (ultra-reliable low-latency communication, URLLC), machine type communication (machine type communication, MTC), massive machine type communication (massive machine type communication, mMTC), D2D, V2X, and IoT.

FIG. 3 is a diagram of a communication system according to an embodiment of this application. As shown in FIG. 3, the communication system 30 includes a terminal device and an access network device. It may be understood that the devices in the communication system 30 may directly communicate with each other, or may communicate with each other through forwarding by another device. This is not specifically limited in embodiments of this application.

It may be understood that FIG. 3 is merely a diagram, and does not constitute a limitation on an applicable scenario of the technical solutions provided in this application. A person skilled in the art should understand that in a specific implementation process, the communication system 30 may also include fewer devices than those shown in FIG. 3, or the communication system 30 may further include another device. In addition, a quantity of devices in the communication system 30 may alternatively be determined based on a specific requirement. This is not limited. The devices in the system shown in FIG. 3 are described below.

The terminal device (terminal equipment) may be referred to as a terminal, user equipment (user equipment, UE), a mobile station (mobile station, MS), a mobile terminal (mobile terminal, MT), or the like, and includes a handheld device, a vehicle-mounted device, a wearable device, or a compute device that has a wireless communication function. Specifically, the terminal device may be a mobile phone (mobile phone), a tablet computer, or a computer with a wireless transceiver function, or may be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in a smart city (smart city), a smart home device, a vehicle-mounted terminal, or the like. In embodiments of this application, an apparatus configured to implement a function of the terminal device may be a terminal device, or may be an apparatus that can support the terminal device in implementing the function, for example, a chip system (for example, a chip, or a processing system including a plurality of chips) or a modem. The following describes the communication method provided in embodiments of this application by using an example in which the apparatus configured to implement the function of the terminal device is a terminal.

The access network device is mainly configured to implement functions such as resource scheduling, radio resource management, and wireless access control over the terminal device, and is a device in a radio access network (radio access network, RAN) to connect the terminal device to a wireless network. The RAN may be connected to a core network (which, for example, may be an LTE core network, or may be a 5G core network). The access network device may be an evolved NodeB (evolved NodeB, eNB, or eNodeB) in LTE, a base station in a 5G network or a future evolved public land mobile network (public land mobile network, PLMN), a broadband network gateway (broadband network gateway, BNG), an aggregation switch, or a non-3GPP access device. Alternatively, the access network device in embodiments of this application may be a radio controller in a cloud radio access network (cloud radio access network, CRAN), a transmission reception point (transmission reception point, TRP), a device including a TRP, or the like. This is not specifically limited in embodiments of this application. Optionally, the access network device in embodiments of this application may include base stations in various forms, for example, a macro base station, a micro base station (also referred to as a small cell), a relay station, and an access point. This is not specifically limited in embodiments of this application. In embodiments of this application, an apparatus configured to implement a function of the access network device may be an access network device, or may be an apparatus that can support the access network device in implementing the function, for example, a chip system (for example, a chip, or a processing system including a plurality of chips) or a modem (modem). The following describes the communication method provided in embodiments of this application by using an example in which the apparatus configured to implement the function of the access network device is a base station.

The following describes the communication method provided in embodiments of this application with reference to the communication system shown in FIG. 3. For actions, terms, and the like in the following embodiments, reference may be made to each other. Names of messages exchanged between devices, names of parameters in the messages, and the like in embodiments are merely examples, and other names may also be used in specific implementation. For example, "corresponding" in the following embodiments may be replaced with "association", and "sending" in the following embodiments may be replaced with "transmission".

FIG. 4 is a schematic flowchart of a communication method according to an embodiment of this application. As shown in FIG. 4, the method may include steps S401 to S403.

S401: An access network device sends a SIB of a cell on a downlink carrier of the cell. Correspondingly, a terminal device receives the SIB of the cell on the downlink carrier of the cell.

The SIB is a message sent by the access network device to the terminal device, and the SIB may include information required by the terminal device for initialization, for example, information required by the terminal device for initial access to the cell.

In this application, the SIB of the cell may carry frequency band information indicating information such as a frequency band corresponding to the uplink carrier of the cell and a frequency band corresponding to the downlink carrier of the cell. The SIB of the cell may carry information such as a frequency band number corresponding to the frequency band corresponding to the uplink carrier of the cell, a frequency band number corresponding to the frequency band corresponding to the downlink carrier of the cell, and information indicating that a frequency band number corresponding to a frequency band corresponding to the uplink and downlink carriers of the cell is a frequency band number corresponding to a first frequency band. The frequency band corresponding to the uplink and downlink carriers of the cell may be understood as that when the frequency band corresponding to the uplink carrier of the cell is the same as the frequency band corresponding to the downlink carrier of the cell, the frequency band corresponding to the uplink carrier of the cell and the frequency band corresponding to the downlink carrier of the cell may be referred to as the frequency band corresponding to the uplink and downlink carriers of the cell for short.

In a possible case, when the SIB of the cell carries the frequency band number corresponding to the frequency band corresponding to the uplink carrier and the frequency band number corresponding to the frequency band corresponding to the downlink carrier, the terminal device may determine the frequency band corresponding to the uplink carrier of the cell and the frequency band corresponding to the downlink carrier of the cell based on a fixed combination manner of each band and a frequency band number corresponding to the band, and the frequency band number corresponding to the frequency band corresponding to the uplink carrier and the frequency band number corresponding to the frequency band corresponding to the downlink carrier that are indicated by the SIB of the cell. In this case, the frequency band corresponding to the uplink carrier is a frequency band identified by the corresponding frequency band number, and the frequency band corresponding to the downlink carrier is a frequency band identified by the corresponding frequency band number.

For example, the SIB is a SIB1, and the SIB1 of the cell carries information indicating that a frequency band number corresponding to a frequency band corresponding to an uplink carrier is n1 and a frequency band number corresponding to a frequency band corresponding to a downlink carrier is n1. In this case, the frequency band that corresponds to the uplink carrier of the cell and that is indicated by the SIB1 of the cell is a frequency band identified by n1, and the frequency band that corresponds to the downlink carrier of the cell and that is indicated by the SIB1 of the cell is a frequency band identified by n1.

The frequency band corresponding to the uplink carrier of the cell is different from the frequency band corresponding to the downlink carrier of the cell.

In this application, when the SIB of the cell carries the frequency band number corresponding to the frequency band corresponding to the uplink carrier of the cell and the frequency band number corresponding to the frequency band corresponding to the downlink carrier of the cell, a fact that the frequency band corresponding to the uplink carrier of the cell is different from the frequency band corresponding to the downlink carrier of the cell corresponds to a fact that the frequency band number corresponding to the frequency band corresponding to the uplink carrier of the cell is different from the frequency band number corresponding to the frequency band corresponding to the downlink carrier of the cell.

For example, the SIB of the cell carries information indicating that the frequency band number corresponding to the frequency band corresponding to the uplink carrier of the cell is n1, and the SIB of the cell carries information indicating that the frequency band number corresponding to the frequency band corresponding to the downlink carrier of the cell is n51. In this case, the terminal device can directly determine that the frequency band corresponding to the uplink carrier of the cell is different from the frequency band corresponding to the downlink carrier of the cell. In this case, an uplink frequency band corresponding to the uplink carrier of the cell is the same as an uplink frequency band corresponding to the frequency band number n1, and a downlink frequency band corresponding to the downlink carrier of the cell is the same as a downlink frequency band corresponding to the frequency band number n51.

In another possible case, the SIB of the cell carries the information indicating that the frequency band number corresponding to the frequency band corresponding to the uplink and downlink carriers of the cell is the frequency band number corresponding to the first frequency band. The first frequency band is a predefined new frequency band, a frequency band number corresponding to the new frequency band is a new frequency band number, and a duplex mode corresponding to the new frequency band may be FDD or a first duplex mode. As described above, the new frequency band number is a frequency band number (for example, n101) that has not appeared in the existing protocol, and the first duplex mode is a duplex mode (for example, a supplementary uplink lite (supplementary uplink lite, SUL-lite) mode) that has not appeared in the existing protocol. Optionally, a frequency difference between an uplink frequency band corresponding to the new frequency band and a downlink frequency band corresponding to the new frequency band is greater than a predefined threshold (for example, 1 GHz). A subcarrier spacing set supported by the new frequency band is classified into an uplink subcarrier spacing set and a downlink subcarrier spacing set. The two sets may be the same or different. A channel bandwidth of the new frequency band is classified into an uplink channel bandwidth and a downlink channel bandwidth. In a case of a same subcarrier, the uplink channel bandwidth and the downlink channel bandwidth may be the same or may be different.

For example, the first frequency band is a predefined new frequency band, the frequency band number corresponding to the first frequency band is n101, an uplink frequency band corresponding to the first frequency band is 869 MHz to 929 MHz, a downlink frequency band corresponding to the first frequency band is 4400 MHz to 5000 MHz, and a duplex mode corresponding to the first frequency band is new SUL-lite. In this case, the SIB of the cell may carry information indicating that the frequency band number corresponding to the frequency band corresponding to the uplink and downlink carriers of the cell is n101.

The SIB of the cell indicates that a frequency difference between a lowest frequency of the frequency band corresponding to the uplink carrier of the cell and a lowest frequency of the frequency band corresponding to the downlink carrier of the cell is greater than a threshold (for example, 1 GHz). In this case, a fact that the frequency difference between the lowest frequency of the frequency band corresponding to the uplink carrier of the cell and the lowest frequency of the frequency band corresponding to the downlink carrier of the cell is greater than the threshold (for example, 1 GHz) corresponds to a fact that both the frequency band corresponding to the uplink carrier of the cell and the frequency band corresponding to the downlink carrier are a new frequency band predefined in the protocol. It is predefined in the protocol that a frequency difference between an uplink frequency band corresponding to the new frequency band and a downlink frequency band corresponding to the new frequency band is greater than a threshold (for example, 1 GHz). Therefore, the fact, indicated by the SIB of the cell, that the frequency difference between the lowest frequency of the frequency band corresponding to the uplink carrier of the cell and the lowest frequency of the frequency band corresponding to the downlink carrier of the cell is greater than the threshold (for example, 1 GHz) is an implicit indication of the frequency band corresponding to the uplink carrier of the cell and the frequency band corresponding to the downlink carrier of the cell.

For example, it is predefined in the protocol that the frequency difference between the uplink frequency band corresponding to the new frequency band and the downlink frequency band corresponding to the new frequency band is greater than 1 GHz. When the SIB of the cell indicates that the frequency difference between the lowest frequency of the frequency band corresponding to the uplink carrier of the cell and the lowest frequency of the frequency band corresponding to the downlink carrier of the cell is greater than 1 GHz, it can be determined that both the frequency band corresponding to the uplink carrier of the cell and the frequency band corresponding to the downlink carrier of the cell are the new frequency band.

Optionally, when the duplex mode corresponding to the new frequency band predefined in the protocol is a unique duplex mode, the SIB of the cell may indicate that a duplex mode corresponding to the frequency band corresponding to the uplink and downlink carriers of the cell is the unique duplex mode. In this case, the unique duplex mode may uniquely identify the new frequency band. Therefore, the unique duplex mode may implicitly indicate that the frequency band corresponding to the uplink and downlink carriers of the cell is the new frequency band.

For example, the first frequency band is a predefined new frequency band, a duplex mode corresponding to the first frequency band is SUL-lite, and the SIB of the cell may indicate the duplex mode SUL-lite corresponding to the frequency band corresponding to the uplink and downlink carriers of the cell. The SUL-lite is a duplex mode that has not appeared in the existing protocol, and the SUL-lite may uniquely identify the first frequency band.

Optionally, in a possible case, when the SIB of the cell indicates that the frequency band corresponding to the uplink and downlink carriers of the cell is the new frequency band predefined in the protocol, the SIB of the cell further indicates an uplink-downlink frame configuration of a time domain resource corresponding to the uplink carrier of the cell and an uplink-downlink frame configuration of a time domain resource corresponding to the downlink carrier of the cell. The uplink-downlink frame configuration of the time domain resource corresponding to the uplink carrier indicates an uplink time domain position that is on the uplink carrier and that is used for transmission of an uplink signal. The uplink-downlink frame configuration of the time domain resource corresponding to the downlink carrier indicates a downlink time domain position that is on the downlink carrier and that is used for transmission of a downlink signal. Correspondingly, the SIB of the cell may carry time domain uplink-downlink frame configuration information corresponding to the uplink carrier of the cell and time domain uplink-downlink frame configuration information corresponding to the downlink carrier of the cell. A granularity of a time domain position may be a frame, a subframe, a slot, or a symbol.

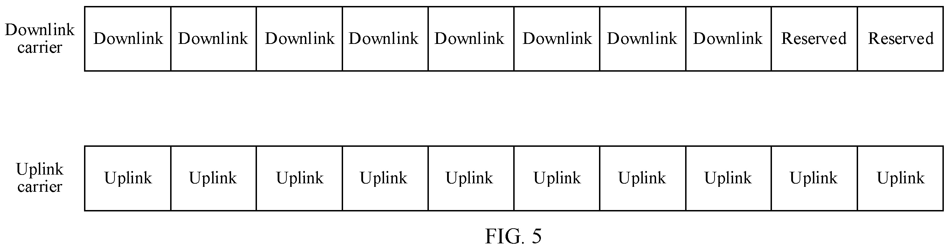

For example, a base station corresponding to the cell configures an available uplink time domain resource for the uplink carrier of the cell and an available downlink time domain resource for the downlink carrier of the cell based on time domain uplink-downlink frame configurations corresponding to uplink and downlink carriers shown in FIG. 5. In this case, the time domain uplink-downlink frame configuration information that is carried in the SIB of the cell and that corresponds to the uplink carrier of the cell is 10:0, and a granularity of the frame configuration is a slot, indicating that all 10 slots on the uplink carrier of the cell can be used for transmission of an uplink signal; and the time domain uplink-downlink frame configuration information corresponding to the downlink carrier of the cell is 8:2, indicating that first eight slots on the downlink carrier of the cell can be used for transmission of a downlink signal, and last two slots cannot be used for transmission of a downlink signal. Correspondingly, the terminal device performs transmission of an uplink signal on the uplink time domain resource indicated by the SIB of the cell, and performs transmission of a downlink signal on the downlink time domain resource indicated by the SIB of the cell.

Optionally, in another possible case, when the SIB of the cell indicates the frequency band number corresponding to the frequency band corresponding to the uplink carrier of the cell and the frequency band number corresponding to the frequency band corresponding to the downlink carrier of the cell, whether the SIB of the cell further indicates the uplink-downlink frame configuration of the time domain resource corresponding to the uplink carrier of the cell and/or the uplink-downlink frame configuration of the time domain resource corresponding to the downlink carrier of the cell is determined based on a duplex mode corresponding to the frequency band number corresponding to the frequency band corresponding to the uplink carrier of the cell and a duplex mode corresponding to the frequency band number corresponding to the frequency band corresponding to the downlink carrier of the cell.

Specifically, when the duplex mode corresponding to the frequency band number corresponding to the frequency band corresponding to the uplink carrier of the cell is FDD, and the duplex mode corresponding to the frequency band number corresponding to the frequency band corresponding to the downlink carrier of the cell is TDD, the SIB of the cell further indicates the uplink-downlink frame configuration of the time domain resource corresponding to the downlink carrier of the cell. By default, the time domain resource corresponding to the uplink carrier of the cell is all downlink.

For example, when the SIB of the cell indicates that the frequency band number corresponding to the frequency band corresponding to the uplink carrier of the cell is n8, and that the frequency band number corresponding to the frequency band corresponding to the downlink carrier of the cell is n38, a duplex mode corresponding to the frequency band number n8 is FDD, and a duplex mode corresponding to the frequency band number n38 is TDD. Therefore, the SIB of the cell further indicates the uplink-downlink frame configuration of the time domain resource corresponding to the downlink carrier of the cell.

Specifically, when the duplex mode corresponding to the frequency band number corresponding to the frequency band corresponding to the uplink carrier of the cell is TDD, and the duplex mode corresponding to the frequency band number corresponding to the frequency band corresponding to the downlink carrier of the cell is TDD, the SIB of the cell further indicates the uplink-downlink frame configuration of the time domain resource corresponding to the uplink carrier of the cell and the uplink-downlink frame configuration of the time domain resource corresponding to the downlink carrier of the cell.

For example, when the SIB of the cell indicates that the frequency band number corresponding to the frequency band corresponding to the uplink carrier of the cell is n96, and that the frequency band number corresponding to the frequency band corresponding to the downlink carrier of the cell is n51, a duplex mode corresponding to the frequency band number n96 is TDD, and a duplex mode corresponding to the frequency band number n51 is TDD. Therefore, the SIB of the cell further indicates the uplink-downlink frame configuration of the time domain resource corresponding to the uplink carrier of the cell and the uplink-downlink frame configuration of the time domain resource corresponding to the downlink carrier of the cell.

Specifically, when the duplex mode corresponding to the frequency band number corresponding to the frequency band corresponding to the uplink carrier of the cell is TDD, and the duplex mode corresponding to the frequency band number corresponding to the frequency band corresponding to the downlink carrier of the cell is FDD, the SIB of the cell further indicates the uplink-downlink frame configuration of the time domain resource corresponding to the uplink carrier of the cell. By default, the time domain resource corresponding to the downlink carrier of the cell is all downlink.

For example, when the SIB of the cell indicates that the frequency band number corresponding to the frequency band corresponding to the uplink carrier of the cell is n96, and that the frequency band number corresponding to the frequency band corresponding to the downlink carrier of the cell is n94, a duplex mode corresponding to the frequency band number n96 is TDD, and a duplex mode corresponding to the frequency band number n94 is FDD. Therefore, the SIB of the cell further indicates the uplink-downlink frame configuration of the time domain resource corresponding to the uplink carrier of the cell.

Specifically, when the duplex mode corresponding to the frequency band number corresponding to the frequency band corresponding to the uplink carrier of the cell is FDD, and the duplex mode corresponding to the frequency band number corresponding to the frequency band corresponding to the downlink carrier of the cell is FDD, the SIB of the cell does not indicate the uplink-downlink frame configuration of the time domain resource corresponding to the uplink carrier of the cell and the uplink-downlink frame configuration of the time domain resource corresponding to the downlink carrier of the cell. By default, the time domain resource corresponding to the uplink carrier of the cell is all uplink. By default, the time domain resource corresponding to the downlink carrier of the cell is all downlink.

For example, when the SIB of the cell indicates that the frequency band number corresponding to the frequency band corresponding to the uplink carrier of the cell is n1, and that the frequency band number corresponding to the frequency band corresponding to the downlink carrier of the cell is n94, a duplex mode corresponding to the frequency band number n1 is FDD, and a duplex mode corresponding to the frequency band number n94 is FDD. Therefore, the SIB of the cell does not indicate the uplink-downlink frame configuration of the time domain resource corresponding to the uplink carrier of the cell.

S402: The terminal device sends, on the uplink carrier of the cell based on the received SIB, a random access request for accessing the cell.

Specifically, the terminal device determines, based on capability information of the terminal device, the uplink frequency band corresponding to the uplink carrier of the cell, and the downlink frequency band corresponding to the downlink carrier of the cell, whether the random access request for accessing the cell can be sent on the uplink carrier of the cell. The uplink frequency band corresponding to the uplink carrier of the cell may be equivalently replaced with an uplink frequency band corresponding to the frequency band corresponding to the uplink carrier of the cell, and the downlink frequency band corresponding to the downlink carrier of the cell may be equivalently replaced with a downlink frequency band corresponding to the frequency band corresponding to the downlink carrier of the cell.

The capability information of the terminal device may include information about a frequency band supported by the terminal device, or a maximum frequency difference between a lowest frequency of a frequency band corresponding to an uplink carrier of a cell supported by the terminal device and a lowest frequency of a frequency band corresponding to a downlink carrier of the cell.

The information about the frequency band supported by the terminal device may include at least one of the following information: a frequency band number, an uplink frequency band, a downlink frequency band, and a duplex mode. For detailed descriptions of the frequency band number, the uplink frequency band, the downlink frequency band, and the duplex mode, refer to the foregoing descriptions. Details are not described herein again.

Specifically, when the capability information of the terminal device includes the information about the frequency band supported by the terminal device, the terminal device may determine, based on the information about the frequency band supported by the terminal device, the frequency band supported by the terminal device, and determine, based on a received SIB, an uplink frequency band corresponding to a frequency band corresponding to an uplink carrier of a cell and a downlink frequency band corresponding to a frequency band corresponding to a downlink carrier of the cell. When the uplink frequency band corresponding to the frequency band corresponding to the uplink carrier of the cell and the downlink frequency band corresponding to the frequency band corresponding to the downlink carrier of the cell are included in the frequency band supported by the terminal device, the terminal device sends, on the uplink carrier of the cell, a random access request for accessing the cell.

For example, the terminal device determines, based on the capability information of the terminal device, that an uplink frequency band corresponding to the frequency band supported by the terminal device is 869 MHz to 929 MHz, and that a downlink frequency band corresponding to the frequency band supported by the terminal device is 4400 MHz to 5000 MHz. A SIB of a cell 1 carries information indicating that a frequency band corresponding to an uplink carrier of the cell 1 is a frequency band identified by n8, and that a frequency band corresponding to a downlink carrier of the cell 1 is a frequency band identified by n79. The terminal device determines, based on the SIB of the cell 1, that an uplink frequency band corresponding to the frequency band corresponding to the uplink carrier of the cell 1 is 880 MHz to 915 MHz, and that a downlink frequency band corresponding to the frequency band corresponding to the downlink carrier of the cell 1 is 4400 MHz to 5000 MHz. In this case, the uplink frequency band corresponding to the frequency band corresponding to the uplink carrier of the cell 1 and the downlink frequency band corresponding to the frequency band corresponding to the downlink carrier of the cell 1 are included in the frequency band supported by the terminal. Therefore, the terminal device may send, on the uplink carrier of the cell 1, a random access request for accessing the cell 1.

Specifically, when the capability information of the terminal device includes the maximum frequency difference between the lowest frequency of the frequency band corresponding to the uplink carrier of the cell supported by the terminal device and the lowest frequency of the frequency band corresponding to the downlink carrier of the cell, the terminal device may determine, based on the capability information of the terminal device, the maximum frequency difference between the lowest frequency of the frequency band corresponding to the uplink carrier of the cell supported by the terminal device and the lowest frequency of the frequency band corresponding to the downlink carrier of the cell. The terminal device determines, based on frequency band information corresponding to an uplink carrier of a cell and frequency band information corresponding to a downlink carrier of the cell that are carried in a SIB, whether a frequency difference between a lowest frequency of a frequency band corresponding to the uplink carrier of the cell and a lowest frequency of a frequency band corresponding to the downlink carrier of the cell is less than or equal to the maximum frequency difference between the lowest frequency of the frequency band corresponding to the uplink carrier of the cell supported by the terminal device and the lowest frequency of the frequency band corresponding to the downlink carrier of the cell. When the frequency difference between the lowest frequency of the frequency band corresponding to the uplink carrier of the cell and the lowest frequency of the frequency band corresponding to the downlink carrier of the cell is less than or equal to the maximum frequency difference between the lowest frequency of the frequency band corresponding to the uplink carrier of the cell supported by the terminal device and the lowest frequency of the frequency band corresponding to the downlink carrier of the cell, the terminal device may send, on the uplink carrier of the cell, a random access request for accessing the cell.

For example, the terminal device determines, based on the capability information of the terminal device, that the maximum frequency difference between the lowest frequency of the frequency band corresponding to the uplink carrier of the cell supported by the terminal and the lowest frequency of the frequency band corresponding to the downlink carrier of the cell is 1 GHz. A SIB of a cell 1 carries information indicating that an uplink frequency band corresponding to a frequency band corresponding to an uplink carrier of the cell 1 is 824 MHz to 849 MHz, and that a frequency range of a downlink frequency band corresponding to a frequency band corresponding to a downlink carrier of the cell 1 is 1995 MHz to 2000 MHz. In this case, a frequency difference between a lowest frequency of the uplink frequency band corresponding to the frequency band corresponding to the uplink carrier of the cell 1 and a lowest frequency of the downlink frequency band corresponding to the frequency band corresponding to the downlink carrier is 1171 MHz. In this case, the frequency difference between the lowest frequency of the frequency band corresponding to the uplink carrier of the cell 1 and the lowest frequency of the frequency band corresponding to the downlink carrier is less than the maximum frequency difference of 1 GHz between the lowest frequency of the frequency band corresponding to the uplink carrier of the cell supported by the terminal device and the lowest frequency of the frequency band corresponding to the downlink carrier of the cell. Therefore, the terminal device may send, on the uplink carrier of the cell 1, a random access request for accessing the cell.

S403: The access network device receives, on the uplink carrier of the cell, the random access request for accessing the cell.

The access network device is an access network device corresponding to the cell whose uplink carrier and downlink carrier correspond to different frequency bands.

Specifically, after receiving, on the uplink carrier of the cell, the random access request that is sent by the terminal device and that is for accessing the cell whose uplink carrier and downlink carrier correspond to different frequency bands, the access network device allocates, to the terminal device, a resource dedicated to the terminal device, so that the terminal device successfully accesses the cell.

Based on the communication method shown in FIG. 4, the terminal device may access a cell whose uplink carrier and downlink carrier correspond to different frequency bands. In this way, the terminal device can access a cell with an uplink carrier in a low frequency band and a downlink carrier in a high frequency band, and an uplink connection and a downlink connection of the terminal device can be both optimal, thereby improving uplink communication quality of a terminal user. In addition, the terminal device can access uplink carriers in different frequency bands based on different service requirements. For example, when a quantity of service requirements is large, the terminal device accesses an uplink carrier in a low frequency band and a high bandwidth. When a latency requirement is low, the terminal device accesses an uplink carrier in a high frequency band.

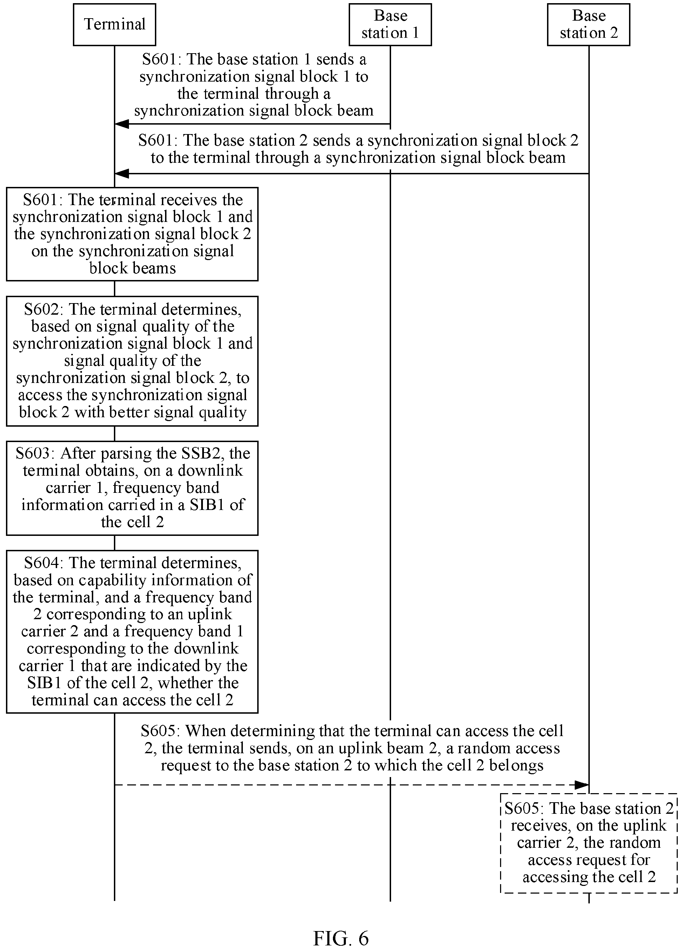

The following describes in detail the communication method shown in FIG. 4 with reference to FIG. 6 by using an example in which a terminal device is a terminal, an access network device is a base station, the terminal is in wireless coverage of a cell 1 and a cell 2, the cell 1 and the cell 2 share a downlink carrier 1, a reference signal received power (Reference Signal Received Power, RSRP) of the cell 1 is less than an RSRP of the cell 2, a base station 1 corresponds to the cell 1, and a base station 2 corresponds to the cell 2.

FIG. 6 is a schematic flowchart of a communication method according to an embodiment of this application. As shown in FIG. 6, the method may include the following steps.

S601: The base station 1 sends a synchronization signal block 1 to the terminal through a broadcast channel, and the base station 2 sends a synchronization signal block 2 to the terminal through a broadcast channel. Correspondingly, the terminal receives the synchronization signal block 1 and the synchronization signal block 2.

The broadcast channel is a channel on which the base station sends messages to all terminal users in the cell, and is a common channel.

The synchronization signal block 1 (system synchronization block 1, SSB1) corresponds to the cell 1, and is used for time synchronization and frequency synchronization between the terminal and the cell 1. The synchronization signal block 2 (system synchronization block 2, SSB2) corresponds to the cell 2, and is used for time synchronization and frequency synchronization between the terminal and the cell 2.

The cell 1 and the cell 2 share a downlink carrier 1. In other words, a frequency of the downlink carrier 1 of the cell 1 is the same as a frequency of the downlink carrier 1 of the cell 2, and a frequency band corresponding to the downlink carrier 1 of the cell 1 is the same as a frequency band corresponding to a downlink carrier 2 corresponding to the cell 2.

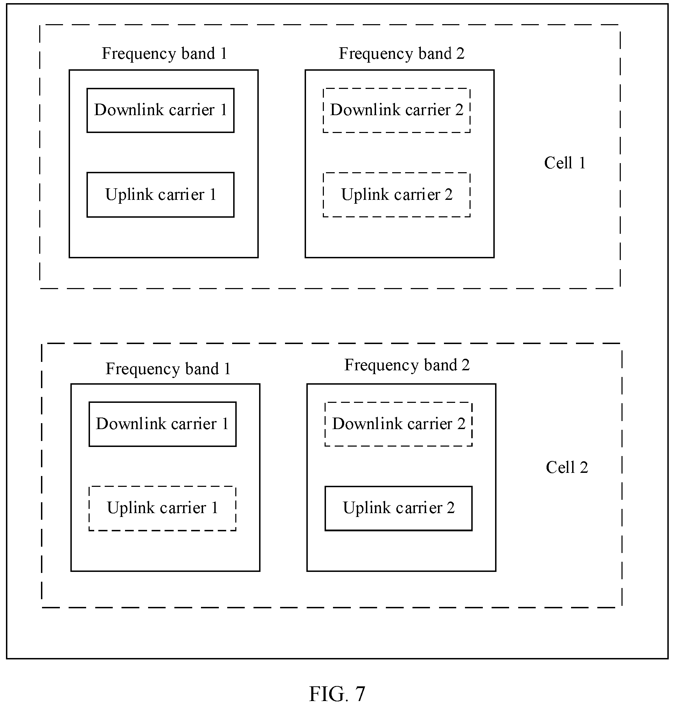

For example, FIG. 7 is a diagram of frequency bands corresponding to uplink and downlink carriers of cells. In FIG. 7, an available uplink carrier of a cell 1 is an uplink carrier 1, a frequency band corresponding to the uplink carrier 1 is a frequency band 1, an available downlink carrier of the cell 1 is a downlink carrier 1, and a frequency band corresponding to the downlink carrier 1 is the frequency band 1. In FIG. 7, an available uplink carrier of the cell 2 is an uplink carrier 2, a frequency band corresponding to the uplink carrier 2 is a frequency band 2, an available downlink carrier of the cell 2 is a downlink carrier 1, and a frequency band corresponding to the downlink carrier 1 is a frequency band 1.

In this application, the base station 1 corresponding to the cell 1 and the base station 2 corresponding to the cell 2 may be a same base station, or may be different base stations.

S602: The terminal determines, based on signal quality of the synchronization signal block 1 and signal quality of the synchronization signal block 2, to access the SSB2 with better signal quality.

Specifically, the terminal compares the RSRP corresponding to the SSB1 with the RSRP corresponding to the SSB2, determines that the RSRP corresponding to the SSB2 is larger, and determines to access the SSB2 with better signal quality. The RSRP is one of key parameters and physical layer measurement requirements that may represent wireless signal strength and wireless signal quality in a wireless network. A larger RSRP of a signal indicates better signal quality.

The SSB2 carries control information corresponding to a system information block 1 (system information block 1, SIB1) of the cell 2. Therefore, after parsing the SSB2, the terminal may obtain the SIB1 of the cell 2. The SIB1 of the cell 2 may carry information required by the terminal to access the cell 2, for example, frequency band information corresponding to uplink and downlink carriers of the cell.

S603: After parsing the SSB2, the terminal obtains, on the downlink carrier 1, the frequency band information carried in the SIB1 of the cell 2.

A process in which the terminal parses the SSB2 is a conventional technology, and details are not described herein.

The frequency band information carried in the SIB1 of the cell 2 may indicate that a frequency band corresponding to an uplink carrier 2 of the cell 2 is a frequency band 2, and the frequency band corresponding to the downlink carrier 1 of the cell 2 is the frequency band 1.

Specifically, the frequency band information carried in the SIB1 of the cell 2 may include: a frequency band number corresponding to the frequency band 2 corresponding to the uplink carrier 2, and a frequency band number corresponding to the frequency band 1 corresponding to the downlink carrier 1.

Similarly, frequency band information that may be carried in a SIB1 of the cell 1 may include: a frequency band number corresponding to a frequency band 1 corresponding to an uplink carrier 1, and the frequency band number corresponding to the frequency band 1 corresponding to the downlink carrier 1.

Optionally, the SIB1 of the cell 2 carries the frequency band number corresponding to the frequency band 2 corresponding to the uplink carrier 2 and the frequency band number corresponding to the frequency band 1 corresponding to the downlink carrier 1. When a duplex mode corresponding to the frequency band number corresponding to the frequency band 2 corresponding to the uplink carrier 2 of the cell 2 is TDD, and a duplex mode corresponding to the frequency band number corresponding to the frequency band 1 corresponding to the downlink carrier 1 of the cell 2 is TDD, the SIB of the cell further indicates an uplink-downlink frame configuration of a time domain resource corresponding to the uplink carrier 2 of the cell 2 and an uplink-downlink frame configuration of a time domain resource corresponding to the downlink carrier 1 of the cell 2. Time domain uplink-downlink frame configuration information corresponding to the uplink carrier 2 of the cell 2 may indicate an uplink slot position that is on the uplink carrier 2 and that is used for transmission of uplink data in a periodicity. Time domain uplink-downlink frame configuration information corresponding to the downlink carrier 1 of the cell 2 may indicate a downlink slot position that is on the downlink carrier 1 and that is used for transmission of downlink data.

Optionally, the SIB1 of the cell 2 carries the frequency band number corresponding to the frequency band 2 corresponding to the uplink carrier 2 and the frequency band number corresponding to the frequency band 1 corresponding to the downlink carrier 1. When a duplex mode corresponding to the frequency band number corresponding to the frequency band 2 corresponding to the uplink carrier 2 of the cell 2 is TDD, and a duplex mode corresponding to the frequency band number corresponding to the frequency band 1 corresponding to the downlink carrier 1 of the cell 2 is FDD, the SIB of the cell further indicates an uplink-downlink frame configuration of a time domain resource corresponding to the uplink carrier 2 of the cell 2. Time domain uplink-downlink frame configuration information corresponding to the uplink carrier 2 of the cell 2 may indicate an uplink slot position that is on the uplink carrier 2 and that is used for transmission of uplink data in a periodicity.

Optionally, the SIB1 of the cell 2 carries the frequency band number corresponding to the frequency band 2 corresponding to the uplink carrier 2 and the frequency band number corresponding to the frequency band 1 corresponding to the downlink carrier 1. When a duplex mode corresponding to the frequency band number corresponding to the frequency band 2 corresponding to the uplink carrier 2 of the cell 2 is FDD, and a duplex mode corresponding to the frequency band number corresponding to the frequency band 1 corresponding to the downlink carrier 1 of the cell 2 is TDD, the SIB of the cell further indicates an uplink-downlink frame configuration of a time domain resource corresponding to the downlink carrier 1 of the cell 2. Time domain uplink-downlink frame configuration information corresponding to the downlink carrier 1 of the cell 2 may indicate a downlink slot position that is on the downlink carrier 1 and that is used for transmission of downlink data.

S604: The terminal determines, based on capability information of the terminal, and the frequency band 2 corresponding to the uplink carrier 2 and the frequency band 1 corresponding to the downlink carrier 1 that are indicated by the SIB1 of the cell 2, whether the terminal can access the cell 2.

For related descriptions of the capability information of the terminal, refer to the related descriptions of the capability information of the terminal device in S402. Details are not described herein again.

In a possible case, when the capability information of the terminal includes information about a frequency band supported by the terminal, the terminal may determine, based on the information about the frequency band supported by the terminal, the frequency band supported by the terminal, where the frequency band supported by the terminal may be used to determine an uplink frequency band supported by the terminal and a downlink frequency band supported by the terminal. The terminal determines, based on the frequency band 2 corresponding to the uplink carrier 2 and the frequency band 1 corresponding to the downlink carrier 1 that are indicated by the SIB1 of the cell 2, whether an uplink frequency band corresponding to the frequency band 2 corresponding to the uplink carrier 2 of the cell 2 is included in the uplink frequency band supported by the terminal, and whether a downlink frequency band corresponding to the frequency band 1 corresponding to the downlink carrier 1 of the cell 2 is included in the downlink frequency band supported by the terminal. When the uplink frequency band corresponding to the frequency band 2 corresponding to the uplink carrier 2 of the cell 2 is included in the uplink frequency band supported by the terminal, and the downlink frequency band corresponding to the frequency band 1 corresponding to the downlink carrier 1 of the cell 2 is included in the downlink frequency band supported by the terminal, the terminal can access the cell 2. When the uplink frequency band corresponding to the frequency band 2 corresponding to the uplink carrier 2 of the cell 2 is not in the uplink frequency band supported by the terminal, and the downlink frequency band corresponding to the frequency band 1 corresponding to the downlink carrier 1 of the cell 2 is not in the downlink frequency band supported by the terminal, the terminal cannot access the cell 2.

For example, the terminal determines, based on the capability information of the terminal, that the uplink frequency band supported by the terminal is 869 MHz to 929 MHz, and the downlink frequency band supported by the terminal is 4400 MHz to 5000 MHz, and the SIB1 of the cell 2 indicates that the uplink frequency band corresponding to the frequency band 2 corresponding to the uplink carrier 2 of the cell 2 is 880 MHz to 915 MHz, and the downlink frequency band corresponding to the frequency band 1 corresponding to the downlink carrier 1 of the cell 2 is 4400 MHz to 5000 MHz. In this case, the uplink frequency band supported by the terminal includes the uplink frequency band corresponding to the frequency band 2 corresponding to the uplink carrier 2, and the downlink frequency band supported by the terminal includes the downlink frequency band corresponding to the frequency band 1 corresponding to the downlink carrier 1. Therefore, the terminal can access the cell 2.

In another possible case, when the capability information of the terminal includes a maximum frequency difference between a lowest frequency of a frequency band corresponding to an uplink carrier of a cell supported by the terminal and a lowest frequency of a frequency band corresponding to a downlink carrier of the cell, the terminal may determine, based on the capability information of the terminal, the maximum frequency difference between the lowest frequency of the frequency band corresponding to the uplink carrier of the cell supported by the terminal and the lowest frequency of the frequency band corresponding to the downlink carrier of the cell. The terminal determines, based on the frequency band 2 corresponding to the uplink carrier 2 and the frequency band 1 corresponding to the downlink carrier 1 that are indicated by the SIB1 of the cell 2, whether a frequency difference between a lowest frequency of the uplink frequency band corresponding to the frequency band 2 corresponding to the uplink carrier 2 of the cell 2 and a lowest frequency of the downlink frequency band corresponding to the frequency band 1 of the downlink carrier 1 of the cell 2 is less than or equal to the maximum frequency difference between the lowest frequency of the frequency band corresponding to the uplink carrier of the cell supported by the terminal and the lowest frequency of the frequency band corresponding to the downlink carrier of the cell. When a frequency difference between a lowest frequency of the frequency band 2 corresponding to the uplink carrier 2 of the cell 2 and a lowest frequency of the frequency band 1 corresponding to the downlink carrier 1 of the cell 2 is less than or equal to the maximum frequency difference between the lowest frequency of the frequency band corresponding to the uplink carrier of the cell supported by the terminal and the lowest frequency of the frequency band corresponding to the downlink carrier of the cell, the terminal can access the cell 2; otherwise, the terminal cannot access the cell 2.

For example, the terminal determines, based on the capability information of the terminal, that the maximum frequency difference between the lowest frequency of the frequency band corresponding to the uplink carrier of the cell supported by the terminal and the lowest frequency of the frequency band corresponding to the downlink carrier of the cell is 1 GHz. The SIB1 of the cell 2 indicates that the lowest frequency of the uplink frequency band corresponding to the frequency band 2 corresponding to the uplink carrier 2 of the cell 2 is 824 MHz, and the lowest frequency of the downlink frequency band corresponding to the frequency band 1 corresponding to the downlink carrier 1 is 1995 MHz. The frequency difference between the lowest frequency of the uplink frequency band corresponding to the frequency band 2 corresponding to the uplink carrier 2 of the cell 2 and the lowest frequency of the downlink frequency band corresponding to the frequency band 1 corresponding to the downlink carrier 1 of the cell 2 is 1171 MHz and is less than 1 GHz. Therefore, the terminal can access the cell 2.

S605: When determining that the terminal can access the cell 2, the terminal sends, on the uplink carrier 2, a random access request for accessing the cell 2 to the base station 2. Correspondingly, the base station 2 receives, on the uplink carrier 2, the random access request for accessing the cell 2.

That the terminal sends, on the uplink carrier 2, the random access request for accessing the cell 2 to the base station 2 is a conventional technology, and details are not described herein again.

Optionally, when determining that the terminal cannot access the cell 2, the terminal re-determines a cell that can be accessed.

Based on the communication method shown in FIG. 5, when the terminal is in the wireless coverage of the cell 1 and the cell 2, the cell 1 and the cell 2 share the downlink carrier 1, and the RSRP of the cell 1 is less than the RSRP of the cell 2, so that the terminal first determines whether the terminal can access the cell 2. The frequency band corresponding to the uplink carrier of the cell 2 is different from the frequency band corresponding to the downlink carrier of the cell 2. When the terminal determines, based on the capability information of the terminal, and the frequency band corresponding to the uplink carrier of the cell and the frequency band corresponding to the downlink carrier of the cell that are indicated by the SIB1 of the cell 2, that the terminal can access the cell 2, the terminal is no longer limited to accessing a cell whose uplink carrier and downlink carrier correspond to a same frequency band (for example, the cell 1). Therefore, the terminal can access, based on a service requirement, the cell 2 whose uplink carrier and downlink carrier correspond to different frequency bands. For example, when a quantity of service requirements is large, the terminal accesses a cell with an uplink carrier in a low frequency band and a downlink carrier in a high frequency band, thereby improving uplink communication quality of a terminal user.

In addition, cell switching means that when a terminal device is in a connected state and maintains a data transmission service, the terminal device moves from one cell to another cell; or an original serving cell (a source cell) cannot continue to serve the terminal device due to reasons such as wireless transmission service load adjustment, activation operation and maintenance, and a device fault, and to avoid interruption of a data transmission service and ensure quality of service, a radio bearer system searches for a most appropriate cell (a target cell) or network to continue to provide an uninterrupted service for the terminal device, thereby implementing mobility management of seamless coverage of a wireless network.

Based on a duplex mode for transmission of uplink and downlink data in a cell, cells may be classified into an FDD cell, a TDD cell, and a supplementary uplink (supplementary uplink, SUL) cell. The FDD cell is a cell in which a duplex mode for transmission of both uplink and downlink data is an FDD mode. In this case, a frequency band corresponding to uplink and downlink carriers of the cell is an FDD frequency band. The TDD cell is a cell in which a duplex mode for transmission of uplink and downlink data is a TDD mode. In this case, a frequency band corresponding to uplink and downlink carriers of the cell is a TDD frequency band. The SUL cell is a cell in which there is an SUL carrier, where a frequency band corresponding to the SUL carrier is an SUL frequency band. An SUL carrier in a low frequency band may be used to enhance uplink coverage of the cell.

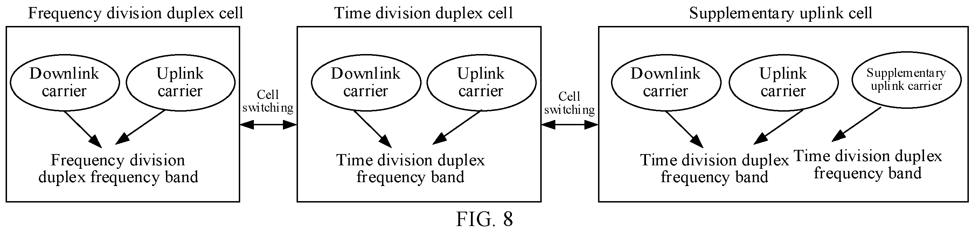

For example, FIG. 8 is a diagram of cells defined in NR. In FIG. 8, an FDD cell includes one uplink carrier and one downlink carrier, and the uplink carrier and the downlink carrier correspond to one FDD frequency band. A TDD cell includes one uplink carrier and one downlink carrier, and the uplink carrier and the downlink carrier correspond to one TDD frequency band. An SUL cell includes one downlink carrier, one normal uplink carrier, and one SUL carrier, where the normal uplink carrier and the downlink carrier correspond to one TDD frequency band, and the SUL carrier corresponds to one SUL frequency band.

When a terminal device moves to a coverage edge of a source cell that serves the terminal device, in order to ensure that the terminal device can continuously access a network, the terminal device needs to switch from the source cell to a target cell. A frequency band corresponding to an uplink carrier of the source cell is the same as a frequency band corresponding to a downlink carrier of the source cell, and a frequency band corresponding to an uplink carrier of the target cell is the same as a frequency band corresponding to a downlink carrier of the target cell. In a case that the frequency band corresponding to the uplink and downlink carriers of the source cell is different from the frequency band corresponding to the uplink and downlink carriers of the target cell, when the terminal device switches from the source cell to the target cell, both the uplink carrier and the downlink carrier are switched. As a result, cell switching time of the terminal device is long, and communication quality of a terminal user is poor. For example, when the terminal device switches from the FDD cell in FIG. 8 to the TDD cell in FIG. 8, the downlink carrier in the FDD frequency band in the FDD cell needs to be switched to the downlink carrier in the TDD frequency band in the TDD cell, and the uplink carrier in the FDD frequency band in the FDD cell needs to be switched to the uplink carrier in the TDD frequency band in the TDD cell. Therefore, switching time is long, and communication quality of the terminal user is poor.

To resolve the problem of long cell switching time of the terminal device and poor communication quality of the terminal user caused by switching of both the uplink carrier and the downlink carrier when the terminal device switches from the source cell to the target cell, this application provides a communication method. The method includes: An access network device obtains first indication information indicating a cell switching manner, and sends the first indication information to a terminal device. The terminal device receives the first indication information from the access network device, and performing cell switching in the cell switching manner indicated by the first indication information. In this way, the terminal device can perform cell switching in the cell switching manner indicated by the first indication information. When the cell switching manner indicated by the first indication information is not switching a downlink carrier and switching an uplink carrier, an uplink access procedure can be reduced, and a downlink for sending downlink data and/or information from the access network device to the terminal device is not interrupted. This reduces latency of service access interruption of the terminal device, and a user plane is not reconfigured, thereby reducing cell switching latency.

The following describes the communication method provided in embodiments of this application with reference to the communication system shown in FIG. 3. For actions, terms, and the like in the following embodiments, reference may be made to each other. Names of messages exchanged between devices, names of parameters in the messages, and the like in embodiments are merely examples, and other names may also be used in specific implementation. For example, "corresponding" in the following embodiments may be replaced with "association", and "sending" in the following embodiments may be replaced with "transmission".

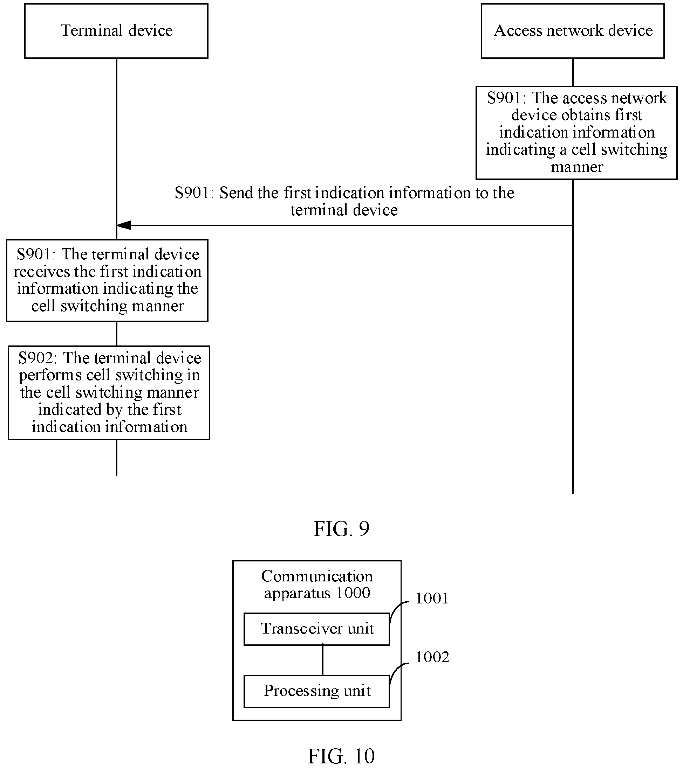

FIG. 9 is a schematic flowchart of a communication method according to an embodiment of this application. As shown in FIG. 9, the method may include steps S901 and S902.

S901: An access network device obtains first indication information indicating a cell switching manner, and sends the first indication information to a terminal device. Correspondingly, the terminal device receives, from the access network device, the first indication information indicating the cell switching manner.

That the access network device obtains the first indication information indicating the cell switching manner may include: The access network device obtains, in a trigger manner, the first indication information indicating the cell switching manner. For example, when the access network device detects that signal strength of a current uplink reference signal is less than a threshold or signal quality of the current uplink reference signal is less than a threshold, the access network device is triggered to obtain the first indication information indicating the cell switching manner. For another example, when the access network device receives a switching request from the terminal device, the access network device is triggered to obtain the first indication information indicating the cell switching manner.

The cell switching manner indicated by the first indication information includes: not switching a downlink carrier and switching an uplink carrier, or switching a downlink carrier and switching an uplink carrier. When the cell switching manner indicated by the first indication information is not switching a downlink carrier and switching an uplink carrier, because the downlink carrier is not switched, a cell switching process performed by the terminal device includes an uplink synchronization procedure (for example, the terminal device sends a random access request to a target cell). When the cell switching manner indicated by the first indication information is switching a downlink carrier and switching an uplink carrier, the terminal device performs cell switching based on an existing cell switching procedure (for example, downlink synchronization, beam sweeping, channel measurement, and uplink synchronization).

In an example, the first indication information may be carried in radio resource control (radio resource control, RRC) reconfiguration signaling, media access control control element (medium access control control element, MAC CE) signaling, or downlink control information (downlink control information, DCI). In other words, the cell switching manner for the terminal device may be directly indicated to the terminal device.

In another example, the access network device sends, to the terminal device, indication information of a to-be-switched-to cell. For example, the terminal device receives the indication information of the to-be-switched-to cell from the access network device, determines a target cell based on the indication information of the to-be-switched-to cell, and compares whether a frequency of a downlink carrier of a source cell is the same as a frequency of a downlink carrier of the target cell. If the frequency of the downlink carrier of the source cell is the same as the frequency of the downlink carrier of the target cell, the terminal device performs the cell switching manner of not switching a downlink carrier and switching an uplink carrier. Otherwise, if the frequency of the downlink carrier of the source cell is different from the frequency of the downlink carrier of the target cell, the terminal device performs the cell switching manner of switching a downlink carrier and switching an uplink carrier.

For example, a cell that currently serves the terminal device is a cell 1, a frequency of a downlink carrier of the cell 1 is 2110 MHz, a frequency of a downlink carrier of a cell 2 is 2110 MHz, and a frequency of a downlink carrier of a cell 3 is 1472 MHz. When indication information of a to-be-switched-to cell that is sent by a base station 1 corresponding to the cell 1 to the terminal device indicates that the to-be-switched-to cell of the terminal device is the cell 2, a cell switching manner for the terminal device is switching an uplink carrier and not switching a downlink carrier; or when indication information of a to-be-switched-to cell that is sent by a base station 1 corresponding to the cell 1 to the terminal device indicates that the to-be-switched-to cell of the terminal device is the cell 3, a cell switching manner for the terminal device is switching an uplink carrier and switching a downlink carrier.

In still another example, it is predefined that the terminal device determines a current cell switching manner for the terminal device based on a frequency difference between a lowest frequency (or a highest frequency) of a frequency band corresponding to a downlink carrier of a source cell (a cell that serves the terminal device before switching) and a lowest frequency (or a highest frequency) of a frequency band corresponding to a downlink carrier of a target cell (a cell that serves the terminal device after switching).

For example, it is predefined that if the frequency difference between the lowest frequency of the frequency band corresponding to the downlink carrier of the source cell and the lowest frequency of the frequency band corresponding to the downlink carrier of the target cell is zero, the terminal device determines that the current cell switching manner is not switching a downlink carrier and switching an uplink carrier; otherwise, the terminal device determines that the current cell switching manner is switching a downlink carrier and switching an uplink carrier. Alternatively, it is predefined that if the frequency difference between the highest frequency of the frequency band corresponding to the downlink carrier of the source cell and the highest frequency of the frequency band corresponding to the downlink carrier of the target cell is zero, the terminal device determines that the current cell switching manner is not switching a downlink carrier and switching an uplink carrier; otherwise, the terminal device determines that the current cell switching manner is switching a downlink carrier and switching an uplink carrier.

As described above, the terminal device determines the cell switching manner based on the indication information of the to-be-switched-to cell, and/or it is predefined that the terminal device determines the cell switching manner based on the frequency difference between the lowest frequency of the frequency band corresponding to the downlink carrier of the source cell and the lowest frequency of the frequency band corresponding to the downlink carrier of the target cell, and/or it is predefined that the terminal device determines the cell switching manner based on the frequency difference between the highest frequency of the frequency band corresponding to the downlink carrier of the source cell and the highest frequency of the frequency band corresponding to the downlink carrier of the target cell. In other words, the cell switching manner for the terminal device may be implicitly indicated to the terminal device.

S902: The terminal device performs cell switching in the cell switching manner indicated by the first indication information.

Specifically, that the terminal device performs cell switching in the cell switching manner indicated by the first indication information includes: When the first indication information indicates that the cell switching manner is switching an uplink carrier and not switching a downlink carrier, the terminal device sends uplink information to a first cell on a first uplink carrier, and receives downlink information of the first cell on a first downlink carrier; and in response to switching from the first cell to a second cell, the terminal device sends uplink information to the second cell on a second uplink carrier, and receives downlink information of the second cell on the first downlink carrier, where the first uplink carrier is different from the second uplink carrier. The first uplink carrier is an available uplink carrier of the first cell, the first downlink carrier is an available downlink carrier of the first cell, the second uplink carrier is an available uplink carrier of the second cell, and the first downlink carrier may also be an available downlink carrier of the second cell. The first cell may alternatively be described as a source cell, and the second cell may alternatively be described as a target cell.

The terminal device receives the downlink information of the first cell or the downlink information of the second cell on the first downlink carrier, so that a downlink communication link of the terminal device is not interrupted.

Based on the communication method shown in FIG. 9, the terminal device may perform cell switching in the cell switching manner directly indicated by the first indication information, or the cell switching manner for the terminal device is implicitly indicated, to provide more options for indicating the cell switching manner for the terminal device. In addition, when the cell switching manner indicated by the first indication information is not switching a downlink carrier and switching an uplink carrier, the terminal device can keep a downlink uninterrupted, thereby reducing service interruption latency and reducing cell switching latency.

The foregoing mainly describes the solutions provided in embodiments of this application from a perspective of interaction between devices. It may be understood that, to implement the foregoing functions, the devices, such as the terminal device and the access network device, include corresponding hardware structures and/or software modules for performing the functions. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, functional modules of the terminal device or the access network device may be obtained through grouping based on the foregoing method examples. For example, functional modules may be obtained through grouping in correspondence to functions, or two or more functions may be integrated into one processing module. The integrated module may be implemented in a form of hardware, or may be implemented in a form of a software functional module. It needs to be noted that grouping of the modules in embodiments of this application is an example, and is merely logical function grouping. During actual implementation, there may be another grouping manner.

FIG. 10 is a diagram of a structure of a communication apparatus 1000. The communication apparatus 1000 may be configured to perform functions of the terminal device in the foregoing embodiments. In a possible implementation, the communication apparatus 1000 shown in FIG. 10 includes a transceiver unit 1001 and a processing unit 1002.

The transceiver unit 1001 is configured to receive a SIB of a cell on a downlink carrier of the cell. For example, the transceiver unit 1001 may support the communication apparatus 1000 in performing S603.

The processing unit 1002 is configured to send, on an uplink carrier of the cell based on the SIB, a random access request for accessing the cell, where a frequency band corresponding to the uplink carrier of the cell is different from a frequency band corresponding to the downlink carrier of the cell. For example, the processing unit 1002 may support the communication apparatus 1000 in performing S604 and S605.

For related descriptions of the uplink carrier of the cell, the downlink carrier of the cell, and the SIB of the cell, refer to the descriptions in the foregoing method embodiments.

Specifically, all related content of the steps in the foregoing method embodiments shown in FIG. 6 may be cited in function descriptions of the corresponding functional modules. Details are not described herein again. The communication apparatus 1000 is configured to perform functions of the terminal device in the communication method shown in FIG. 6, and therefore can achieve a same effect as the foregoing communication method.

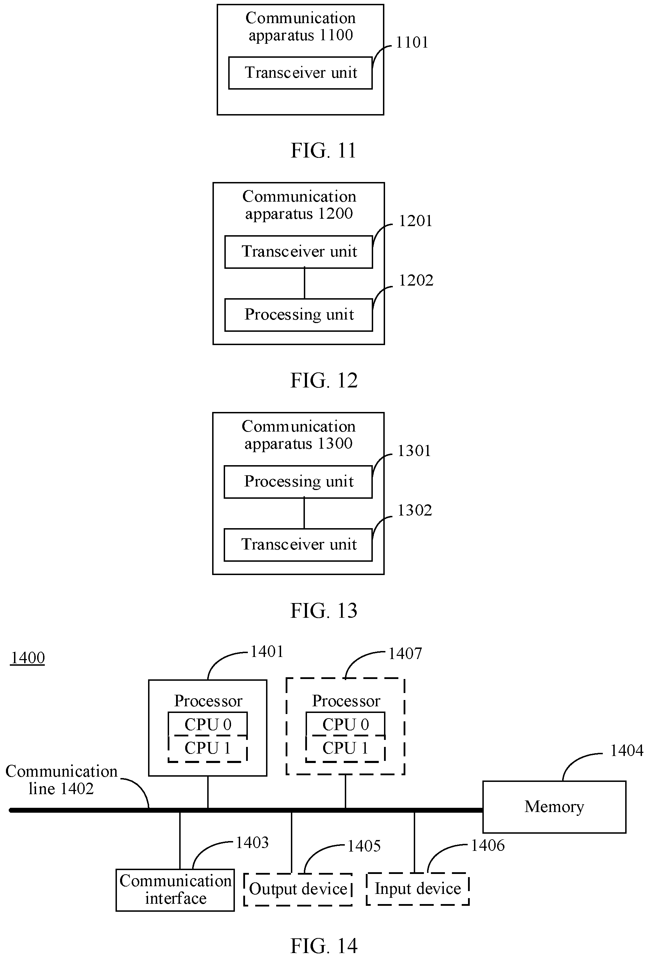

FIG. 11 is a diagram of a structure of a communication apparatus 1100. The communication apparatus 1100 may be configured to perform functions of the access network device in the foregoing embodiments. In an implementation, the communication apparatus 1100 shown in FIG. 11 includes a transceiver unit 1101.

The transceiver unit 1101 is configured to send a SIB of a cell on a downlink carrier of the cell. For example, the transceiver unit 1101 may be configured to support the communication apparatus 1100 in performing S601.

The transceiver unit 1101 is further configured to receive, on an uplink carrier of the cell, a random access request for accessing the cell, where a frequency band corresponding to the uplink carrier of the cell is different from a frequency band corresponding to the downlink carrier of the cell. For example, the transceiver unit 1101 may be configured to support the communication apparatus 1100 in performing S605.

For related descriptions of the uplink carrier of the cell, the downlink carrier of the cell, and the SIB of the cell, refer to the descriptions in the foregoing method embodiments.

Specifically, all related content of the steps in the foregoing method embodiments shown in FIG. 6 may be cited in function descriptions of the corresponding functional modules. Details are not described herein again. The communication apparatus 1100 is configured to perform functions of the access network device in the communication method shown in FIG. 6, and therefore can achieve a same effect as the foregoing communication method.

FIG. 12 is a diagram of a structure of a communication apparatus 1200. The communication apparatus 1200 may be configured to perform functions of the terminal device in the foregoing embodiments. In an implementation, the communication apparatus 1200 shown in FIG. 12 includes a transceiver unit 1201 and a processing unit 1202.

The transceiver unit 1201 is configured to receive first indication information from an access network device corresponding to a first cell. For example, the transceiver unit 1201 may be configured to support the communication apparatus 1200 in performing S901.

The processing unit 1202 is configured to perform cell switching in a cell switching manner indicated by the first indication information, where the first indication information indicates a cell switching manner of switching an uplink carrier and not switching a downlink carrier. For example, the processing unit 1202 may be configured to support the communication apparatus 1200 in performing S902.

For related descriptions of the first indication information, refer to the descriptions in the foregoing method embodiments.

Specifically, all related content of the steps in the foregoing method embodiments shown in FIG. 9 may be cited in function descriptions of the corresponding functional modules. Details are not described herein again. The communication apparatus 1200 is configured to perform functions of the terminal device in the communication method shown in FIG. 9, and therefore can achieve a same effect as the foregoing communication method.

FIG. 13 is a diagram of a structure of a communication apparatus 1300. The communication apparatus 1300 may be configured to perform functions of the access network device in the foregoing embodiments. In a possible implementation, the communication apparatus 1300 shown in FIG. 13 includes a processing unit 1301 and a transceiver unit 1302.

The processing unit 1301 is configured to obtain first indication information. For example, the processing unit 1301 may be configured to support the communication apparatus 1300 in performing S901.

The transceiver unit 1302 is configured to send the first indication information, where the first indication information indicates a cell switching manner of switching an uplink carrier and not switching a downlink carrier. For example, the transceiver unit 1302 may be configured to support the communication apparatus 1300 in performing S901.

For related descriptions of the first indication information and the cell switching manner, refer to the descriptions in the foregoing method embodiments.

Specifically, all related content of the steps in the foregoing method embodiments shown in FIG. 9 may be cited in function descriptions of the corresponding functional modules. Details are not described herein again. The communication apparatus 1300 is configured to perform functions of the access network device in the communication method shown in FIG. 9, and therefore can achieve a same effect as the foregoing communication method.

As described above, a processing module may be a processor or a controller, and may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. A communication module may be a transceiver circuit, a communication interface, or the like. A storage module may be a memory. When the processing module is a processor, the communication module is a communication interface, and the storage module is a memory, the communication apparatus 1000, the communication apparatus 1100, the communication apparatus 1200, and the communication apparatus 1300 in embodiments of this application may be a communication apparatus 1400 shown in FIG. 14. For example, the terminal device and the access network device described above may use a composition structure shown in FIG. 14 or include components shown in FIG. 14. FIG. 14 is a diagram of composition of the communication apparatus 1400 according to an embodiment of this application. As shown in FIG. 14, the communication apparatus 1400 may include a processor 1401, a communication line 1402, and a communication interface 1403.

Further, the communication apparatus 1400 may further include a memory 1404. The processor 1401, the memory 1404, and the communication interface 1403 may be connected to each other through the communication line 1402.

The processor 1401 may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 1401 may be another communication apparatus having a processing function, for example, a circuit, a device, or a software module.

The communication line 1402 is configured to transfer information between components included in the communication apparatus 1400.

The communication interface 1403 is configured to communicate with another device or another communication network. The another communication network may be an Ethernet, a radio access network (radio access network, RAN), a wireless local area network (wireless local area network, WLAN), or the like. The communication interface 1403 may be a radio frequency module, a transceiver, or any communication apparatus that can implement communication. In embodiments of this application, an example in which the communication interface 1403 is a radio frequency module is used for description. The radio frequency module may include an antenna, a radio frequency circuit, and the like. The radio frequency circuit may include a radio frequency integrated chip, a power amplifier, and the like.

The memory 1404 is configured to store instructions. The instructions may be a computer program.

The memory 1404 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage, or a magnetic disk storage medium or another magnetic storage device. The optical disc storage includes a compact disc, a laser disc, an optical disc, a digital versatile disc, a Blu-ray disc, and the like.

It should be noted that the memory 1404 may exist independently of the processor 1401, or may be integrated with the processor 1401. The memory 1404 may be configured to store instructions, program code, some data, or the like. The memory 1404 may be located inside the communication apparatus 1400, or may be located outside the communication apparatus 1400. This is not limited. The processor 1401 is configured to execute the instructions stored in the memory 1404, to implement a method for sending a preamble in a random access process provided in the following embodiments of this application.

In an example, the processor 1401 may include one or more CPUs, for example, a CPU 0 and a CPU 1 in FIG. 14.

In an optional implementation, the communication apparatus 1400 includes a plurality of processors. For example, the communication apparatus 1400 may further include a processor 1407 in addition to the processor 1401 in FIG. 14.

In an optional implementation, the communication apparatus 1400 further includes an output device 1405 and an input device 1406. The input device 1406 is a keyboard, a mouse, a microphone, or a joystick, and the output device 1405 is a device such as a display or a speaker (speaker).

It should be noted that the communication apparatus 1400 may be a desktop computer, a portable computer, a network server, a mobile phone, a tablet computer, a wireless terminal device, an embedded device, a chip system, or a device having a structure similar to that in FIG. 14. In addition, the composition structure shown in FIG. 14 does not constitute a limitation on the communication apparatus. In addition to the components shown in FIG. 14, the communication apparatus may include more or fewer components than those shown in the figure, or some components may be combined, or different component arrangements may be used.

In this embodiment of this application, the chip system may include a chip, or may include a chip and another discrete component.

An embodiment of this application further provides a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit of the terminal device, for example, including a data transmit end and/or a data receive end, in any one of the foregoing embodiments, for example, a hard disk or a memory of the terminal device. Alternatively, the computer-readable storage medium may be an external storage device of the terminal device, for example, a plug-in hard disk drive, a smart media card (smart media card, SMC), a secure digital (secure digital, SD) card, or a flash card (flash card) that is configured on the terminal device. Further, the computer-readable storage medium may alternatively include both an internal storage unit and an external storage device of the terminal device. The computer-readable storage medium is configured to store the computer program and other programs and data required by the terminal device. The computer-readable storage medium may be further configured to temporarily store data that has been output or is to be output.

It should be understood that collection, storage, use, processing, transmission, provision, disclosure, and the like of personal user information in the technical solutions of this application all comply with related laws and regulations, and do not violate public order and good morals. For example, in the technical solutions in this application, the personal user information is processed with user authorization, as stated herein and not reiterated further.

It should be noted that in the specification, claims, and accompanying drawings of this application, the terms "first", "second", and the like are intended to distinguish between different objects, but are not intended to describe a particular sequence. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

It should be understood that in embodiments of this application, "B corresponding to A" indicates that B is associated with A. For example, B may be determined based on A. It should be further understood that determining B based on A does not mean that B is determined based only on A, and B may alternatively be determined based on A and/or other information. In addition, the term "connection" in embodiments of this application means various connection manners such as direct connection or indirect connection to achieve communication between devices. This is not limited in embodiments of this application.

Unless otherwise specified, "transmission" (transmit/transmission) in embodiments of this application refers to bidirectional transmission, and includes a sending action and/or a receiving action. Specifically, "transmission" in embodiments of this application includes data sending, data receiving, or data sending and receiving. In other words, data transmission herein includes uplink data transmission and/or downlink data transmission. Data may include a channel and/or a signal. The uplink data transmission is uplink channel transmission and/or uplink signal transmission, and the downlink data transmission is downlink channel transmission and/or downlink signal transmission. In embodiments of this application, a "network" and a "system" express a same concept, and a communication system is a communication network.

The foregoing descriptions about implementations allow a person skilled in the art to understand that, for the purpose of convenient and brief description, grouping of the foregoing functional modules is taken as an example for illustration. In actual application, the foregoing functions can be allocated to different functional modules and implemented according to a requirement, that is, an inner structure of an apparatus is grouped into different functional modules to implement all or some of the functions described above.

In the several embodiments provided in this application, it should be understood that the disclosed communication apparatuses and methods may be implemented in other manners. For example, the described communication apparatus embodiments are merely examples. For example, grouping of the modules or units is merely logical function grouping. During actual implementation, another grouping manner may be used. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such understanding, the technical solutions of embodiments of this application essentially, or the part contributing to the conventional technology, or all or some of the technical solutions may be implemented in the form of a software product. The software product is stored in a storage medium and includes several instructions for instructing a device, which may be, for example, a single-chip microcomputer or a chip, or a processor (processor) to perform all or some of the steps of the methods described in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving a system information block SIB of a cell on a downlink carrier of the cell; and
sending, on an uplink carrier of the cell based on the SIB, a random access request for accessing the cell, wherein a frequency band corresponding to the uplink carrier of the cell is different from a frequency band corresponding to the downlink carrier of the cell.

2. The method according to claim 1, wherein
the SIB of the cell indicates that a frequency difference between a lowest frequency of the frequency band corresponding to the uplink carrier of the cell and a lowest frequency of the frequency band corresponding to the downlink carrier of the cell is greater than a threshold.

3. The method according to claim 1, wherein
the SIB of the cell indicates an uplink-downlink frame configuration of a time domain resource corresponding to the uplink carrier of the cell and an uplink-downlink frame configuration of a time domain resource corresponding to the downlink carrier of the cell.

4. The method according to claim 3, wherein
the uplink-downlink frame configuration of the time domain resource corresponding to the uplink carrier of the cell is different from the uplink-downlink frame configuration of the time domain resource corresponding to the downlink carrier of the cell.

5. A communication method, wherein the method comprises:
sending a system information block SIB of a cell on a downlink carrier of the cell; and
receiving, on an uplink carrier of the cell, a random access request for accessing the cell, wherein a frequency band corresponding to the uplink carrier of the cell is different from a frequency band corresponding to the downlink carrier of the cell.

6. The method according to claim 5, wherein
the SIB of the cell indicates that a frequency difference between a lowest frequency of the frequency band corresponding to the uplink carrier of the cell and a lowest frequency of the frequency band corresponding to the downlink carrier of the cell is greater than a threshold.

7. The method according to claim 5, wherein
the SIB of the cell indicates an uplink-downlink frame configuration of a time domain resource corresponding to the uplink carrier of the cell and an uplink-downlink frame configuration of a time domain resource corresponding to the downlink carrier of the cell.

8. The method according to claim 7, wherein
the uplink-downlink frame configuration of the time domain resource corresponding to the uplink carrier of the cell is different from the uplink-downlink frame configuration of the time domain resource corresponding to the downlink carrier of the cell.

9. A communication apparatus, wherein the communication apparatus comprises:
a transceiver unit, configured to receive a system information block SIB of a cell on a downlink carrier of the cell; and
a processing unit, configured to send, on an uplink carrier of the cell based on the SIB, a random access request for accessing the cell, wherein a frequency band corresponding to the uplink carrier of the cell is different from a frequency band corresponding to the downlink carrier of the cell.

10. A communication apparatus, wherein the communication apparatus comprises:
a transceiver unit, configured to send a system information block SIB of a cell on a downlink carrier of the cell; and
the transceiver unit is further configured to receive, on an uplink carrier of the cell, a random access request for accessing the cell, wherein a frequency band corresponding to the uplink carrier of the cell is different from a frequency band corresponding to the downlink carrier of the cell.

11. A communication apparatus, wherein the communication apparatus comprises a processor and a communication interface, and the processor and the communication interface are configured to support the communication apparatus in performing the communication method according to any one of claims 1 to 4, or the communication method according to any one of claims 5 to 8.

12. A communication system, wherein the communication system comprises the communication apparatus according to claim 9 and the communication apparatus according to claim 10, or the communication system comprises the communication apparatus according to claim 9 and the communication apparatus according to claim 11, or the communication system comprises the communication apparatus according to claim 10 or 11.

13. A computer-readable storage medium, wherein the computer-readable storage medium stores computer instructions; and when the computer instructions are run on a computer, the computer is caused to perform the method according to any one of claims 1 to 4 or the method according to any one of claims 5 to 8.

14. A computer program product, wherein the computer program product comprises computer instructions; and when the computer instructions are run on a computer, the computer is caused to perform the method according to any one of claims 1 to 4 or the method according to any one of claims 5 to 8.
